(19) Europäisches Patentamt
European Patent Office
Office européen des brevets

(11) **EP 4 414 422 A1**

(12) **EUROPEAN PATENT APPLICATION**
published in accordance with Art. 153(4) EPC

(43) Date of publication:
**14.08.2024 Bulletin 2024/33**

(21) Application number: **22878576.2**

(22) Date of filing: **06.10.2022**

(51) International Patent Classification (IPC):
***C08L 67/02*** *(2006.01)* ***C08G 63/16*** *(2006.01)*
***C08K 5/17*** *(2006.01)* ***C08L 101/16*** *(2006.01)*

(52) Cooperative Patent Classification (CPC):
**C08G 63/16; C08K 5/17; C08L 67/02; C08L 101/16**

(86) International application number:
**PCT/JP2022/037405**

(87) International publication number:
**WO 2023/058708 (13.04.2023 Gazette 2023/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.10.2021 JP 2021165126**

(71) Applicant: **Mitsubishi Chemical Corporation**
**Chiyoda-ku**
**Tokyo 100-8251 (JP)**

(72) Inventors:
- **MIYAMACHI, Remi**
  **Tokyo 100-8251 (JP)**
- **NOGUCHI, Hiroshi**
  **Tokyo 100-8251 (JP)**
- **YAMAMOTO, Yasuhito**
  **Tokyo 100-8251 (JP)**
- **KIMURA, Takatoshi**
  **Tokyo 100-8251 (JP)**
- **KATO, Satoshi**
  **Tokyo 100-8251 (JP)**
- **IKEDA, Yuta**
  **Tokyo 100-8251 (JP)**

(74) Representative: **Vossius & Partner**
**Patentanwälte Rechtsanwälte mbB**
**Siebertstrasse 3**
**81675 München (DE)**

# (54) BIODEGRADABLE RESIN COMPOSITION, MOLDED ARTICLE, AND BIOLOGICAL DEGRADATION METHOD

(57) The present invention provides a biodegradable resin composition containing a polyester resin and one or more compounds selected from nitrogen compounds represented by the general formula (I) and salts thereof (excluding (RS)-1-methyl-2-nitro-3-[(3-tetrahydrofuryl)methyl]guanidine, compounds represented by the general formula $NH_2$-CHR-COOH (in the formula, R represents hydrogen or a monovalent aliphatic hydrocarbon group), and phenylalanine), in which the polyester resin is a resin having dicarboxylic acid unit and a diol unit, in which the content of the compound is 0.1 % by weight or more and 70 % by weight or less, in which the concentration of nitrogen atom in the compound is 6 % by weight or more, and in which the molecular weight of the compound is less than 10000 (in the formula, R, R', and R" each independently represent a hydrogen atom or a monovalent organic group which may have a substituent group which does not form a ring structure with each other).

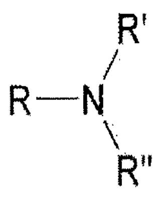

(I)

EP 4 414 422 A1

## Description

### Technical Field

The present invention relates to a biodegradable resin composition, a molded article containing the biodegradable resin composition, and a biodegradation method.

### Background Art

In modem society, plastics are used in a wide range of applications around us such as packaging materials, home appliance materials, and construction materials since they are excellent in lightweight, electrical insulation, moldability, and durability. Plastics used for these applications include polyethylene, polypropylene, polystyrene, polyvinyl chloride, polyethylene terephthalate, and the like. However, these molded products of plastics tend to remain underground even when they are buried after use, since they are difficult to be decomposed in natural environment. Further, even when they are incinerated, harmful gas is generated and may damage the incinerators, therefore, in recent years, products that can be composted at home (home compostable products) have been in demand around the world, from the viewpoint of preventing environmental pollution.
As means of solving the above problems, research regarding the materials having biodegradability, which are decomposed into carbon dioxide and water by microorganism in compost, has been conducted. Typical examples of biodegradable materials include biodegradable resins such as polylactic acid (hereinafter sometimes abbreviated as "PLA") (Non Patent Literature 1).

### Citation List

### Non Patent Literature

Non Patent Literature 1: Polymer Degradation and Stability 98 (2013) 1089-1096

### Summary of Invention

### Technical Problem

Furthermore, although in recent years, plastics discarded in the ocean have become a major social problem, the studies regarding a resin which decomposes in seawater have not been conducted. In particular, since in seawater there are few decomposing bacteria, there is a problem that even resins which decompose in compost are more difficult to decompose.
Therefore, an object of the present invention is to provide a biodegradable resin composition that has a high biodegradation rate and a high biodegradability. Further, particularly, it is to provide a biodegradable resin composition that has a high biodegradation rate and a high biodegradability.

### Solution to Problem

The present inventors conducted intensive studies in view of the above circumstances. Specifically, they focused on compounds containing amino groups and thought that compounds containing amino groups contribute to the acceleration of decomposition. Namely, they focused on the effect of the biofilm formation which is considered to be necessary for decomposition in seawater, and when various resins and polyamines are used together, they found that a certain polyamine significantly promoted the biodegradation of certain polyester resins in seawater. After further investigation, the inventors found that a significant biodegradation promoting effect for a specific polyester resin can be obtained by a specific nitrogen compound, thereby solving the above problems, and completed the present invention. Namely, the gist of the present invention is as follows.
[1] A biodegradable resin composition containing:

a polyester resin; and
one or more compounds selected from nitrogen compounds represented by the general formula (I) and salts thereof (excluding (RS)-1-methyl-2-nitro-3-[(3-tetrahydrofuryl)methyl]guanidine, compounds represented by the general formula $NH_2$-CHR-COOH (in the formula, R represents hydrogen or a monovalent aliphatic hydrocarbon

group), and phenylalanine),
in which the polyester resin is a resin having dicarboxylic acid unit and a diol unit,
in which the content of the compound is 0.1 % by weight or more and 70 % by weight or less,
in which the concentration of nitrogen atom in the compound is 6 % by weight or more, and
in which the molecular weight of the compound is less than 10000,

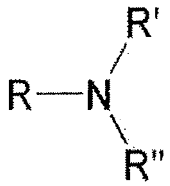 (I)

(in the formula, R, R', and R" each independently represent a hydrogen atom or a monovalent organic group which may have a substituent group which does not form a ring structure with each other).

[2] A biodegradable resin composition containing:

a polyester resin; and
one or more compounds selected from nitrogen compounds represented by the general formula (II) and salts thereof (excluding (RS)-1-methyl-2-nitro-3-[(3-tetrahydrofuryl)methyl]guanidine),
in which the polyester resin is a resin having a dicarboxylic acid unit and a diol unit,
in which the content of the compound is 0.1 % by weight or more and 70 % by weight or less,
in which the concentration of nitrogen atom in the compound is 6 wt% or more, and
in which the molecular weight of the compound is 90 or more and less than 10000,

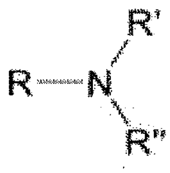 (II)

(in the formula, R, R', and R" each independently represent a hydrogen atom or a monovalent aliphatic organic group, and the aliphatic organic group have a substituent group which does not form a ring structure each other.)

[3] The biodegradable resin composition according to the above item [1] or [2],
in which the concentration of nitrogen atoms derived from the compound contained in the resin composition is 50 ppm by weight or more.
[4] The biodegradable resin composition according to the above item [1] or [3],

in which the monovalent organic group which may have a substituent group is a monovalent chain aliphatic organic group which may have a substituent group having 1 to 20 carbon atoms,
in which the main chain of the organic group may contain elements of Groups 15 to 17, and
in which the organic group may contain one or more of elements of a nitrogen atom, a sulfur atom, and a phosphorus atom.

[5] The biodegradable resin composition according to the above item [2] or [3],

in which the monovalent aliphatic organic group which may have a substituent group is a monovalent chain aliphatic organic group which may have a substituent group having 1 to 20 carbon atoms,
in which the main chain of the aliphatic organic group may contain elements of Groups 15 to 17, and
in which the aliphatic organic group may contain one or more of elements of a nitrogen atom, a sulfur atom, and a phosphorus atom.

[6] The biodegradable resin composition according to the above items [1] to [5],
in which the nitrogen compound is at least one selected from the group consisting of an aliphatic monoamine, an aliphatic diamine, and an amino acid.

[7] The biodegradable resin composition according to any one of the above items [1] to [6], in which the compound is one or more selected from the group consisting of spermine, tetramethylenediamine, arginine, asparagine, serine, and their hydrochlorides.

[8] The biodegradable resin composition according to any one of the above items [1] to [7], in which an acid value of the polyester resin is 19 eq/t or more and 250 eq/t or less.

[9] The biodegradable resin composition according to any one of the above items [1] to [8], in which the polyester resin has three or more types of structural units.

[10] The biodegradable resin composition according to any one of the above items [1] to [9], in which the polyester resin is an aliphatic polyester resin or aliphatic-aromatic polyester resin.

[11] The biodegradable resin composition according to any one of the above items [1] to [10], in which the polyester resin has one or more types selected from the group consisting of 1,4-butanediol, 1,3-propanediol, and ethylene glycol, as diol units.

[12] The biodegradable resin composition according to any one of the above items [1] to [11], in which the polyester resin has 2 to 24 carbon dicarboxylic acids as dicarboxylic acid units.

[13] The biodegradable resin composition according to any one of the above items [1] to [12], in which the polyester resin has at least either of a succinic acid unit and a sebacic acid unit.

[14] The biodegradable resin composition according to any one of the above items [1] to [13], in which the polyester resin is at least one selected from the group consisting of polybutylene succinate adipate (PBSA), polybutylene succinate sebacate (PBSSe), polybutylene succinate (PBS) and polybutylene sebacate terephthalate (PBSeT).

[15] A molded article containing the biodegradable resin composition according to any one of the above items [1] to [14].

[16] A biodegradation method of polyester resin which is a method of biodegrading polyester resin,

in which a glass transition temperature of the polyester resin is 40°C or lower, and in which the polyester resin is biodegraded in seawater in the presence of one or more compounds selected from nitrogen compounds represented by the following general formula (I) and salts thereof having a molecular weight of less than 10000,

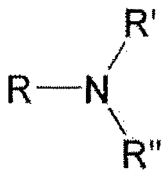

(I)

(in the formula, R, R', and R" each independently represent a hydrogen atom or a monovalent organic group which may have a substituent group which does not form a ring structure with each other).

Advantageous Effects of Invention

According to the present invention, it is possible to provide a biodegradable resin composition that has a high biodegradation rate and a high biodegradability, and particularly contributes greatly to solving environmental problems such as marine pollution.

Description of Embodiments

Embodiments of the present invention will be described in detail below.

The present invention is not limited to the following description, and modifications can be arbitrarily made, without departing from the gist of the present invention. In this description, when "to" is used to express numerical values or physical property values before and after it, it is assumed that the values before and after it are included.

The present invention will be described in detail below, but the explanation of the constituent elements described below is an example (representative example) of an embodiment of the present invention, and the present invention is not limited to these contents, and various modifications can be made within the scope of the gist.

One embodiment of the present invention is a biodegradable resin composition (hereinafter, it may be referred to as "the biodegradable resin composition according to the present embodiment" or "the resin composition of the present invention") which contains a polyester resin and a specific nitrogen compound.

In this description, "biodegradability" means a property in which resin is decomposed into low molecules such

as oligomers and monomers by the action of microorganisms through hydrolysis and the like, which are further decomposed into water, carbon dioxide, and the like. The resin composition of the present invention is usually biodegraded in at least one environment of seawater, freshwater, brackish water, soil, and compost.

In particular, in seawater, the resin is difficult to biodegrade, since the amount and types of microorganisms are small. However, the resin composition of the present invention can exhibit its effects in such an environment where it is difficult to biodegrade. Namely, the resin composition of the present invention is preferably highly biodegradable in seawater (marine biodegradable resin composition).

Hereinafter, the constituent components, properties, manufacturing method, and applications of the biodegradable resin composition according to this embodiment will be explained.

[Nitrogen compounds and their salts]

<First embodiment>

The biodegradable resin composition according to first embodiment of the present invention contains a nitrogen compound, represented by the following general formula (I) (hereinafter sometimes referred to as "nitrogen compound (I)"), and one or more compounds selected from its salts (hereinafter sometimes referred to as "compounds such as nitrogen compound (I)").

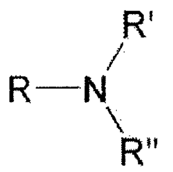

(I)

In the formula, R, R', and R" each independently represent a hydrogen atom or a monovalent organic group which may have a substituent group which does not form a ring structure with each other.

However, (RS)-1-methyl-2-nitro-3-[(3-tetrahydrofuryl)methyl]guanidine, compounds represented by general formula $NH_2$-$CHR^1$-COOH (in the formula, $R^1$ represents hydrogen or a monovalent aliphatic hydrocarbon group), and phenylalanine, are excluded from compounds such as nitrogen compound (I).

At least one of the monovalent organic groups which may have a substituent group for R, R' and R" is preferably an aliphatic organic group which may contain an element of Groups 15 to 17 in the main chain or side chain, and more preferably contains at least one of a nitrogen atom, a phosphorus atom, a sulfur atom, a fluorine atom, and a chlorine atom. Moreover, the organic group which may have a substituent group is preferably a monovalent chain aliphatic organic group having 1 to 20 carbon atoms.

At least one of R, R' and R" is preferably a hydrogen atom, and more preferably two of them are hydrogen atoms.

Examples of elements of Group 15 to Group 17, which may be contained in the main chain of the organic group, include nitrogen atom, oxygen atom, sulfur atom, phosphorus atom, selenium atom, fluorine atom, chlorine atom, and bromine atom. Among these, nitrogen atom, sulfur atom and phosphorus atom are preferred, nitrogen atom and phosphorus atom are more preferable, and nitrogen atom is most preferable. Further, the organic group may include one or more atoms selected from the group consisting of elements of Groups 15 to 17 in the side chain.

The organic group may be an aliphatic organic group or an aromatic organic group. The aliphatic organic group may be chain or annular. Further, it may contain a carbon-carbon unsaturated bond. Among these, the organic group is preferably an aliphatic organic group, and among the aliphatic organic groups, a chain aliphatic organic group is more preferable, and a linear aliphatic organic group is even more preferable. Further, at least one of R, R' and R" is preferably an aliphatic organic group which may have a substituent.

Note that "may include one or more atoms selected from the group consisting of elements of Groups 15 to 17" means that it may contain a fluorine atom, chlorine atom, bromine atom, iodine atom, astatine atom, primary amino group, hydroxy group, carboxyl group, thiol group, acetyl group, carboxymethyl group, and the like, as a substituent, or in addition, means that the carbon skeleton may contain a linking group containing a nitrogen atoms such as a secondary amino group, tertiary amino group, ether bond, carbonyl bond, and thioether bond, or a sulfur atoms. Among these, as a substituent, an embodiment containing a primary amino group ($-NH_2$), a hydroxyl group, or a carboxyl group, or an embodiment containing a secondary amino group (-NH-) or an ether bond, is preferable, and an embodiment containing a primary amino group or a secondary amino group, is more preferable. Note that the embodiment containing a secondary amino group in the carbon skeleton of the organic group does not mean a polymer containing a repeating unit having an amino group in the polymer main chain.

The number of carbon atoms in the organic group is not particularly limited, and may be appropriately selected

so as to be within the range of the molecular weight of the nitrogen compound (I) or its salt, which will be described later. However, the number of carbon atoms in the main chain of at least one of the organic groups is usually 1 or more, preferably 3 or more, more preferably 4 or more, particularly preferably 5 or more, from the viewpoint of promoting effect of biodegradability, availability, the workability. Further, it is usually 40 or less, preferably 20 or less, more preferably 16 or less, even more preferably 11 or less, particularly preferably 8 or less, and most preferably 6 or less. In addition, when having any substituents, the number of carbon atom is, including those substituents, usually 3 or more, preferably 4 or more, more preferably 5 or more, even more preferably 6 or more, and usually 45 or less, preferably 30 or less, more preferably 20 or less, even more preferably 10 or less, particularly preferably 6 or less.

From the viewpoint of promoting the decomposition of the biodegradable resin in seawater, it is preferable that compounds such as nitrogen compound (I) are easily eluted in seawater. Here, WO2009/113288 discloses a technique of using a specific crystal nucleating agent (compounds represented by the general formula $NH_2$-$CHR^1$-COOH (in the formula, $R^1$ represents hydrogen or a monovalent aliphatic hydrocarbon group) and phenylalanine) for a polyester resin having a low crystallization rate. However, since the crystal nucleating agent is considered to be insoluble, the crystal nucleating agent disclosed in WO2009/113288 is excluded from the compounds such as the nitrogen compound (I) according to the present invention.

<Second embodiment>

The biodegradable resin composition according to second embodiment of the present invention contains a nitrogen compound, represented by the following general formula (II) ("nitrogen compound (II)"), and one or more compounds selected from its salts ("compounds such as nitrogen compound (II)") (however, (RS)-1-methyl-2-nitro-3-[(3-tetrahydrofuryl)methyl]guanidine is excluded.)

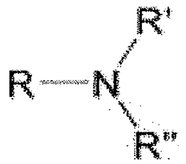

(II)

(in the formula, R, R’, and R" each independently represent a hydrogen atom or a monovalent aliphatic organic group, and the aliphatic organic group have a substituent group which does not form a ring structure each other.)

From the viewpoint of promoting the decomposition of the biodegradable resin, it is preferable that compounds such as nitrogen compounds (I) and (II) are easily eluted in seawater.

Therefore, the $NH_2$ dissociation constant (pKa) of compounds such as nitrogen compounds (I) and (II) is preferably small since the compounds such as nitrogen compounds (I) and (II) are easily eluted as ions in seawater.

Specifically, the $NH_2$ dissociation constant (pKa) is preferably 9.75 or less, more preferably 9.60 or less, even more preferably 9.30 or less, particularly preferably 9.15 or less, and most preferably 9.00 or less. On the other hand, from the viewpoint of ease of handling, it is preferably 6.00 or more, more preferably 8.00 or more, particularly preferably 8.50 or more, particularly preferably 8.80 or more, and most preferably 8.90 or more. Note that the $NH_2$ dissociation constant (pKa) is described in Molecular Cloning Vol. 3 Appendix 7.

From the viewpoint of easily eluting into seawater, the aliphatic organic groups of nitrogen compounds (I) and (II) preferably have a substituent other than a hydrocarbon group, and the substituent is preferably a hydrophilic group. The hydrophilic group is not particularly limited, however preferably contains an amino group, a hydroxy group, a sulfonic group, a thiol group, an amide group, a carboxy group, an aldehyde group, and the like; more preferable contains an amino group, a hydroxy group, a sulfonic group, a thiol group, and an amide group; even more preferably contains an amino group, a hydroxy group, a sulfonic group, and a thiol group; particularly preferably contains an amino group or a hydroxy group; most preferably contains an amino group. One or more of the hydrophilic groups preferably are preferably contained, two or more are more preferably contained, three or more are even more preferably contained, and four or more are particularly contained. Further, the number of hydrophilic groups is usually 9 or less, preferably 7 or less, and more preferably 5 or less.

The nitrogen compounds (I) and (II) preferably have a distribution coefficient logD representing hydrophobicity of -3.45 or less. The distribution coefficient logD is more preferably -3.60 or less, even more preferably -4.00 or less, particularly preferably -4.40 or less, significantly preferably -5.00 or less, and most preferably -5.10 or less. Further, the distribution coefficient logD is preferably -10.00 or more, more preferably -8.00 or more, even more preferably -7.00 or more, particularly preferably -6.00 or more, and most preferably -5.20 or more. The distribution coefficient logD is obtained from an estimated value at pH 7 using CAS SciFinder$^n$ (https://www.jaici.or.jp/sshifwinder-n/).

Further, the hydrophobic index (an index indicating ease of solubility in water) of the nitrogen compounds (I)

and (II) and the like, is preferably high from the viewpoint of promoting the decomposition of the biodegradable resin. Specifically, it is preferably -10.0 or more, more preferably -5.0 or more, even more preferably -4.5 or more, particularly preferably -4.0 or more. Furthermore, on the other hand, it is preferably 0.0 or less, more preferably -0.5 or less, even more preferably -2.0 or less, particularly preferably -3.0 or less, especially preferably -3.5 or less, most preferably -4.0 or less. The hydrophobicity index was introduced in Kyte and Doolittle, J. Mol. Biol., 157, 105-132 (1982), and is calculated from hydrophilic and hydrophobic properties.

The preferable range of monovalent aliphatic organic groups of R, R', and R" is the same as the preferred range etc. of the monovalent organic group optionally having substituents R, R' and R" in the first embodiment.

Specific nitrogen compounds (I) and (II) include monoalkylamines such as propylamine, butylamine, pentylamine, hexylamine, and isobutylamine; dialkylamines such as dimethylamine and diethylamine; trialkylamines such as N-butyldimethylamine; alkylene diamines such as trimethylene diamine, tetramethylene diamine (putrescine), pentamethylene diamine (cadaverine), hexamethylene diamine, heptamethylene diamine, octamethylene diamine, decamethylene diamine; alkylene diamine having an NH group in the alkylene skeleton such as bis(3-aminopropyl)amine, N-(3-aminopropyl)-1,3-propanediamine (norspermidine), N-(3-aminopropyl)tetramethylenediamine (spermidine), N,N'-bis(3-aminopropyl)-1,4-butanediamine (spermine), 3,3'-diamino-N-methyldipropylamine, N-benzyl 1,3-propanediamine; amino acids such as arginine, asparagine, aspartic acid, cysteine, glutamine, glutamic acid, isoleucine, leucine, lysine, methionine, serine, threonine, valine; amino sugar derivatives such as glucosamine and neuraminic acid; amino sugar derivatives such as N-acetylglucosamine, muramic acid, N-acetylmuramic acid, N-acetylneuraminic acid, and N-acetylgalactosamine; amide compounds such as imide compound, N-butylpropionamide, N-etylacetamide.

Among these, preferable nitrogen compounds (I) and (II) include monoalkylamines such as hexylamine and isobutylamine; alkylene diamines such as trimethylene diamine, tetramethylene diamine (putrescine), pentamethylene diamine, hexamethylene diamine, heptamethylene diamine, octamethylene diamine; alkylene diamines having an NH group in the alkylene skeleton, such as norspermidine, spermine, and spermidine; polyamines such as putrescine; amino acids such as arginine, asparagine, aspartic acid, glutamine, lysine, and serine; amino sugar derivatives such as N-acetylglucosamine. Among these, pentamethylene diamine, hexamethylene diamine, butylamine, norspermidine, spermine, spermidine, putrescine, asparagine, glutamine, and arginine are even more preferred, and norspermidine, spermine, spermidine, putrescine, asparagine, and arginine, are particularly preferred. Asparagine and arginine are preferred, and arginine is most preferred, because of their ease of availability.

In addition, spermine, tetramethylene diamine, arginine, asparagine, serine, and their hydrochlorides are preferred, from the viewpoint of environmental friendliness , cost, ease of practical implementation.

Further, as the nitrogen compounds (I), and (II), etc., aliphatic monoamines, aliphatic diamines, and amino acids are particularly preferred.

Examples of the salts of nitrogen compounds (I) and (II) include salts of inorganic acids such as hydrogen halides and sulfuric acid. Hydrogen halide is a general term for hydrogen fluoride, hydrogen chloride, hydrogen bromide, hydrogen iodide, and hydrogen astatide. Among these, the inorganic acid that forms a salt with the nitrogen compound (I) is preferably hydrogen chloride.

The molecular weights of the nitrogen compounds (I) and (II) and the like are less than 10,000. Here, when the compounds such as nitrogen compound (I) and (II) are polymers, the molecular weight is the weight-average molecular weight. The molecular weight is preferably less than 5000, more preferably less than 500, even more preferably less than 300, particularly preferably less than 200, significantly preferably less than 180, and most preferably less than 175, from the viewpoint of promoting biodegradability. Further, the lower limit of the molecular weight of the nitrogen compounds (I) and (II) etc. is not particularly limited, but is usually 90 or more, even more preferably 100 or more, particularly preferably 130 or more, more preferably 150 or more, and most preferably 170 or more. Namely, the nitrogen compounds (I) and (II) and the like are preferably low molecular weight compounds rather than monomer polymers (for example, polymers with a degree of polymerization of 100 or more).

The molecular weights of compounds such as nitrogen compounds (I) and (II) can be measured by GPC (gel permeation chromatography), elemental analysis, and the like.

The number of nitrogen elements contained in compounds such as nitrogen compounds (I) and (II)and the like is usually 1 or more, preferably 2 or more, more preferably 3 or more, particularly preferably 4 or more, and usually 15 or less, preferably 9 or less, more preferably 7 or less, particularly preferably 5 or less, and most preferably 4 or less.

The weight ratio of nitrogen to carbon contained in compounds such as nitrogen compounds (I) and (II) is usually 5 or less, preferably 2.5 or less, more preferably 1.2 or less, and even more preferably 1.0 or less, particularly preferably 0.8 or less, most preferably 0.7 or less. On the other hand, it is usually 0.01 or more, preferably 0.05 or more, more preferably 0.15 or more, even more preferably 0.30 or more, particularly preferably 0.50 or more, especially preferably 0.60 or more, most preferably 0.70 or more.

When compounds such as nitrogen compounds (1) and (II) contain secondary and tertiary amines, their content is preferably low. When primary, secondary, and tertiary amines are present in compounds such as nitrogen compounds (1) and (II), the existence ratio of primary amines to secondary and tertiary amines is usually 0.1 or more, preferably 0.4

or more, even more preferably 1.0 or more. Further, the upper limit is not particularly limited, but is usually 5 or less, preferably 2.5 or less.

The concentration of nitrogen atoms contained in compounds such as nitrogen compounds (I) and (II) is preferably 6% by weight or more, and more preferably 7% by weight or more, and even more preferably 10% by weight or more, particularly preferably 20% by weight or more, significantly preferably 25% by weight or more, and most preferably 30% by weight or more, from the view point that the biodegradation promoting effect is easily exhibited. On the other hand, the amount is preferably 60% by weight or less, more preferably 50% by weight or less, even more preferably 40% by weight or less, and particularly preferably 35% by weight or less, since the basicity is not too high and the activity of microorganisms is not easily reduced.

It is preferable that the nitrogen compounds (I) and (II), etc. are difficult to inhibit the growth of microorganisms. Further, from the viewpoint of safety, it is preferable that it is not a dangerous substance or an insecticide. In addition, since the compounds such as nitrogen compounds (I) and (II) are used to promote the biodegradation of resins, it is preferably that the resin has no or weak function of imparting ultraviolet absorption or light resistance to the resin, such as ultraviolet absorbers or light stabilizers.

In the biodegradable resin composition, the nitrogen compounds (I) and (II) etc. are contained in an amount of 0.1% by weight or more and 70% by weight or less. The amount of nitrogen compounds (I) and (II) etc. contained in the biodegradable resin composition may be adjusted appropriately depending on the type of resin, the type of nitrogen compounds (I) and (II) etc., the applications of biodegradable resin composition, and the like. The content of compounds such as nitrogen compound (I) and (II) etc. is more preferably 0.5% by weight or more, particularly preferably 1% by weight or more, and most preferably 5% by weight or more. On the other hand, the content is preferably 50% by weight or less, more preferably 40% by weight or less, even more preferably 20% by weight or less, and particularly preferably 10% by weight or less.

By setting the content of compounds such as nitrogen compounds (I) and (II) in the biodegradable resin composition within the above range, the composition is likely to have both biodegradability and mechanical properties when processed into a molded article.

The concentration of nitrogen atoms derived from compounds such as nitrogen compounds (I) and (II) etc., contained in the biodegradable resin composition of the present invention, is preferably 50 ppm or more by weight, more preferably 70 ppm by weight or more, even more preferably 100 ppm by weight or more, particularly preferably 200 ppm by weight or more, most preferably 500 ppm by weight or more, from the viewpoint that the biodegradation promoting effect is easily exhibited. On the other hand, it is preferably 42% by weight or less since the basicity is not too high and the activity of microorganisms is unlikely to decrease.

The particle size of the nitrogen compounds (I) and (II) is usually 500 μm or less, preferably 250 μm, more preferably 100 μm or less, even more preferably 50 μm or less, particularly preferably 20 μm or less, from the viewpoints of being easily mixed with the biodegradable resin, hard to cause poor appearance, and ease of obtaining the effect of promoting biodegradation. Furthermore, in particular, in order to obtain good mechanical properties and appearance as well as a biodegradation promoting effect, the particle size is preferably 18 μm or less, more preferably 13 μm or less, and even more preferably 10 μm or less. The lower limit value is not particularly limited, but from the viewpoint of workability, it is preferably 0.1 μm or more, more preferably 0.5 μm or more, even more preferably 1.0 μm or more, and particularly preferably 3.0 μm or more.

[Polyester resin]

The polyester resin contained in the biodegradable resin composition according to this embodiment is a resin having dicarboxylic acid units and diol units. By using such a resin, biodegradability is more likely to be improved when a resin composition is made with compounds such as nitrogen compound (I) and (II). Namely, the polyester resin is preferably a biodegradable polyester resin.

Specifically, polybutylene succinate adipate (PBSA), polybutylene succinate sebacate (PBSSe), polybutylene succinate (PBS) and polybutylene sebacate terephthalate (PBSeT), are preferred.

Polyester resins having dicarboxylic acid units and diol units may be copolymerized with units other than dicarboxylic acid units or diol units, however the ratio of the total amount of dicarboxylic acid units and diol units to the entire resin is preferably 30 mol% or more, more preferably 40 mol% or more, even more preferably 50 mol% or more, and particularly preferably 60 mol% or more, especially preferably 80 mol% or more, and most preferably 100 mol%.

The polyester resin may be an aliphatic polyester resin, an aromatic polyester resin, or an aliphatic-aromatic polyester resin. Aliphatic polyester resins or aliphatic-aromatic polyester resins are preferred because of their high flexibility.

The polyester resin used in the present invention may be one type, or two or more types of polyester resins having different types of constituent units, ratio of constituent units, manufacturing methods, physical properties, etc. may be used in combination in any combination and ratio. Further, other resins may be used in combination as long as

the effects of the present invention are not impaired. When using other resins together, it is preferable to use biodegradable resins together.

The polyester resin contained in the biodegradable resin composition according to this embodiment will be described in detail below. Note that each repeating unit in the polyester resin is also referred to as a compound unit with respect to the compound from which each repeating unit is derived. For example, repeating units derived from aliphatic diols are also called as "aliphatic diol units", repeating units derived from aliphatic dicarboxylic acids are also called as "aliphatic dicarboxylic acid units", and repeating units derived from aromatic dicarboxylic acids are also called as "aromatic dicarboxylic acid units". Furthermore, the "main constituent unit" in the polyester resin usually refers to a constituent unit in which the constituent unit is included in the polyester resin in an amount of 80% by weight or more, and constituent units other than the main constituent unit may not be included.

<Polyester resin containing diol unit and dicarboxylic acid unit>

Polyester resin containing a diol unit and a dicarboxylic acid unit will be described in detail below.

The diol unit contained in the polyester resin may be either aliphatic or aromatic, however aliphatic is preferable and the diol unit represented by the following general formula (1) is particularly preferable, since it is easily biodegradable.

$$-O-R^1-O- \qquad (1)$$

In formula (1), $R^1$ represents an aliphatic hydrocarbon group having 2 or more and 20 or less carbon atoms.

The number of carbon atoms in the aliphatic hydrocarbon group represented by $R^1$ is usually 2 or more, preferably 4 or more, and usually 20 or less, preferably 16 or less, more preferably 12 or less, even more preferably 6 or less, from the viewpoint of moldability, mechanical strength, and the like. A particularly preferred aliphatic hydrocarbon group is an aliphatic hydrocarbon group having 4 carbon atoms.

As the aliphatic diol providing the aliphatic diol unit represented by the formula (1), for example, ethylene glycol, 1,3-propanediol, 1,4-butanediol, 1,4-cyclohexanedimethanol, etc. are preferable, 1,4-butanediol, 1,3-propanediol and ethylene glycol are more preferred, and 1,4-butanediol is particularly preferred.

The diol unit contained in the polyester resin may contain one type or two or more types of units in any combination and ratio. When the polyester resin contains multiple types of diol units, the aliphatic diol unit is preferably contained in an amount of 30 mol% or more, more preferably 50 mol% or more, based on all diol units.

The diol units contained in the polyester resin may contain aromatic diol units. Specific examples of aromatic diol components providing aromatic diol units include xylylene glycol, 4,4'-dihydroxybiphenyl, 2,2-bis(4'-hydroxyphenyl)propane, 2,2-bis(4'-β-hydroxyethoxyphenyl)propane, bis(4-hydroxyphenyl)sulfone, and bis(4-(3-hydroxyethoxyphenyl)sulfonic acid. The aromatic diol component may be a derivative of an aromatic diol compound. Alternatively, the compound may have a structure in which a plurality of aliphatic diol compounds and/or aromatic diol compounds are dehydrated and condensed with each other.

The dicarboxylic acid units contained in the polyester resin may be aliphatic or aromatic. Further, the dicarboxylic acid unit contained in the polyester resin may have one type or two or more types of units in any combination and ratio, and may contain an aliphatic dicarboxylic acid unit and an aromatic dicarboxylic acid unit. However, from the viewpoint of biodegradability, the dicarboxylic acid unit preferably includes an aliphatic dicarboxylic acid unit. When the polyester resin contains multiple types of diol units, the aliphatic diol unit is preferably contained in an amount of 30 mol% or more, more preferably 40 mol% or more, based on all dicarboxylic acid units. On the other hand, there is no lower limit value for aliphatic dicarboxylic acid units, but they need not be contained. When the polyester resin contains aromatic dicarboxylic acid units, the aromatic dicarboxylic acid unit is preferably contained in an amount of 70 mol% or less, more preferably 60 mol% or less, based on all dicarboxylic acid unit.

The dicarboxylic acid unit preferably has 2 to 24 carbon atoms. The number of carbon atoms in the dicarboxylic acid unit is preferably 4 or more from the viewpoint of biodegradability, moldability, and mechanical strength, and on the other hand, it is more preferably 22 or less, even more preferably 16 or less, particularly preferably 13 or less, and most preferably 10 or less.

The dicarboxylic acid unit contained in the polyester resin is preferably a dicarboxylic acid unit represented by the following general formula (2) or oxalic acid.

$$-OC-R^2-CO- \qquad (2)$$

In formula (2), $R^2$ represents a single bond, an aliphatic hydrocarbon group having 1 or more and 22 or less carbon atoms, an aromatic hydrocarbon group having 4 or more and 8 or less carbon atoms, or a heteroaromatic group.

The number of carbon atoms in the aliphatic hydrocarbon group represented by $R^2$ is usually 1 or more, preferably 2 or more, and on the other hand, preferably 22 or less, more preferably 16 or less, even more preferably 12

or less, and particularly preferably is 8 or less. When the polyester resin contains two or more types of aliphatic dicarboxylic acid units represented by formula (2), the combination of aliphatic hydrocarbon groups is preferably a combination of an aliphatic hydrocarbon group having 2 carbon atoms with an aliphatic hydrocarbon group having 4 or more and 10 or less carbon atoms.

The aliphatic dicarboxylic acid component providing the aliphatic dicarboxylic acid unit represented by formula (2) is not particularly limited, but its carbon number is preferably 2 or more, more preferably 4 or more, and on the other hand, it is preferably 24 or less, more preferably 22 or less, even more preferably 13 or less, and particularly preferably 10 or less. Namely, derivatives such as aliphatic dicarboxylic acids having 2 or more and 24 or less carbon atoms or alkyl esters thereof are preferable, derivatives such as aliphatic dicarboxylic acids having 2 or more and 22 or less carbon atoms or alkyl esters thereof are more preferable, and derivatives such as aliphatic dicarboxylic acids having 4 or less and 10 or less carbon atoms or alkyl esters thereof are even more preferable.

Preferred aliphatic dicarboxylic acid units include, for example, oxalic acid, malonic acid, succinic acid, glutaric acid, adipic acid, pimelic acid, suberic acid, azelaic acid, sebacic acid, brasylic acid, undecanedioic acid, and dodecanedioic acid. Among these, adipic acid, succinic acid and sebacic acid are preferred, succinic acid and sebacic acid are more preferred, and sebacic acid is particularly preferred.

In the polyester resin, the ratio of the above-mentioned preferred dicarboxylic acid units in all dicarboxylic acid units is preferably 5 mol% or more, more preferably 10 mol% or more, and even more preferably 50 mol% or more, particularly preferably 64 mol% or more, most particularly preferably 68 mol% or more. Note that the upper limit is 100 mol%. By setting the preferable ratio of dicarboxylic acid in the polyester resin within the above range, it is possible to obtain a biodegradable resin composition with improved moldability as well as excellent heat resistance and biodegradability.

The polyester resin preferably contains two or more types of aliphatic dicarboxylic acid components, and more preferably contains two or more types of the above-mentioned preferred aliphatic dicarboxylic acid components. In this case, the combination of aliphatic dicarboxylic acid components is preferably a combination of an aliphatic dicarboxylic acid having 4 carbon atoms or a derivative thereof with an aliphatic dicarboxylic acid having 6 or more and 12 or less carbon atoms, more preferably a combination of an aliphatic dicarboxylic acid having 4 carbon atoms or a derivative thereof and an aliphatic dicarboxylic acid having 6 or more and 10 or less carbon atoms. Specifically, the combination of aliphatic dicarboxylic acid components preferably includes at least one of succinic acid or its derivatives, adipic acid or its derivatives, azelaic acid or its derivatives, sebacic acid or its derivatives, and brasylic acid or its derivatives, and it is more preferably combine two or more types of dicarboxylic acid components from among these.

The dicarboxylic acid component to be combined with succinic acid or a derivative thereof is preferably pimelic acid, suberic acid, azelaic acid, sebacic acid, brasylic acid, undecanedioic acid or dodecanedioic acid or a derivative thereof, more preferably a combination of adipic acid, azelaic acid or sebacic acid or a derivative thereof, and even more preferably a combination of sebacic acid or a derivative thereof.

Specifically, the following polyester resins are preferred. As the polyester resin having a succinic acid unit, polybutylene succinate (PBS), polybutylene succinate adipate (PBSA), polybutylene succinate sebacate (PBSSe), and polybutylene succinate azelate (PBSAz) are preferable, a polyester resin having two or more types of dicarboxylic acid units such as polybutylene succinate adipate (PBSA), polybutylene succinate sebacate (PBSSe), polybutylene succinate azelate (PBSAz), and polybutylene succinate brachylate (PBSBr) are more preferable. Among these, polybutylene succinate adipate (PBSA) is more preferred from the viewpoint of the ease of availability of raw materials. As the polyester resin having sebacic acid units, polybutylene succinate sebacate (PBSSe), polybutylene sebacate terephthalate (PBSeT) and polybutylene sebacate furanoate (PBSSeF) are preferable, and polybutylene succinate sebacate (PBSSe) and polybutylene sebacate terephthalate (PBSeT) are more preferred, and polybutylene succinate sebacate (PBSSe) is particularly preferred. As the polyester resin having azelaic acid units, polybutylene succinate azelate (PBSAz) and polybutylene azelate terephthalate (PBAzT) are preferable. As the polyester resin having adipic acid units, polybutylene succinate adipate (PBSA) and polybutylene adipate terephthalate (PBAT) are preferable. As the polyester resin having brasylic acid units, polybutylene succinate brassylate (PBSBr) and polybutylene brassylate terephthalate (PBBrT) are preferable.

The dicarboxylic acid unit combined with the succinic acid unit is preferably contained in an amount of 5 mol% or more, more preferably 10 mol% or more, and even more preferably 15 mol% or more, and on the other hand, it is preferably 50 mol% or less, more preferably 45 mol% or less, and even more preferably 40 mol% or less, with respect to the total dicarboxylic acid units. By copolymerizing aliphatic dicarboxylic acid units other than succinic acid units within the above range, the crystallinity of the polyester resin can be lowered and the biodegradation rate can be increased.

The aromatic dicarboxylic acid component providing the aromatic dicarboxylic acid unit represented by formula (2) is not particularly limited, however its carbon number is usually 4 or more and 8 or less, preferably 6 or more. Specific examples include 1,2-phenylene group, 1,3-phenylene group, 1,4-phenylene group, and 2,5-furandiyl group.

The aromatic dicarboxylic acid component providing the aromatic dicarboxylic acid unit represented by formula (2) is not particularly limited, however it is usually an aromatic dicarboxylic acid having the above-mentioned preferred

carbon number or a derivative thereof. Specific examples include phthalic acid, isophthalic acid, terephthalic acid, 2,5-furandicarboxylic acid, and derivatives thereof, and among them, terephthalic acid, 2,5-furandicarboxylic acid, and derivatives thereof are preferred, and 2,5-furandicarboxylic acid and derivatives thereof are more preferred.

Note that the derivatives of aromatic dicarboxylic acids include lower alkyl esters of aromatic dicarboxylic acids having 1 to 4 carbon atoms, acid anhydrides, and the like. Specific examples of aromatic dicarboxylic acid derivatives include lower alkyl esters such as methyl ester, ethyl ester, propyl ester, and butyl ester of the above-mentioned aromatic dicarboxylic acids; and cyclic acid anhydrides of aromatic dicarboxylic acids. Among them, dimethyl terephthalate is preferred.

The polyester resin having dicarboxylic acid units may be a mixture of polyester resins having different amounts of dicarboxylic acid units, and for example, it is possible to adjust the ratio of preferred dicarboxylic acid units in polyester resins within the above range by blending polyester resins containing only the above-mentioned preferred dicarboxylic acid units and polyester resins containing dicarboxylic acid units other than these.

As the examples of polyester resins, aliphatic polyester resins containing aliphatic diol units and aliphatic dicarboxylic acid units as main constituent units (hereinafter sometimes referred to as "aliphatic polyester resins (A)"), aliphatic-aromatic polyester resin (B), which is a resin in which at least some of the repeating units of aliphatic polyester resin (A) are replaced by aromatic compound units, and aromatic polyester resin (polyarylate) (C), which is a resin in which the repeating units of aliphatic polyester resin (A) are replaced by aromatic compound units, are preferable.

(Aliphatic polyester resin (A))

As the aliphatic polyester resin (A), aliphatic polyester resin containing an aliphatic diol unit represented by the above formula (1) and an aliphatic dicarboxylic acid unit represented by the above formula (2) in which $R^2$ is an aliphatic hydrocarbon group, is preferable.

The aliphatic diol unit represented by formula (1) and the aliphatic dicarboxylic acid unit represented by formula (2) in which $R^2$ is an aliphatic hydrocarbon group are as described above. Further, the aliphatic polyester resin preferable as the aliphatic polyester (A) is also as described above.

As examples of the aliphatic polyester resin (A), polybutylene succinate resins such as polybutylene succinate (PBS), polybutylene succinate adipate (PBSA), polybutylene succinate sebacate (PBSSe), and polybutylene succinate azelate (PBSAz), are preferable.

(Aliphatic-aromatic polyester resin (B))

The aliphatic-aromatic polyester resin (B) is a resin in which at least some of the repeating units of the above-mentioned aliphatic polyester resin (A) are replaced with aromatic compound units. As the aliphatic-aromatic polyester resin (B), aliphatic-aromatic polyester resin containing an aliphatic diol unit represented by the above formula (1) and an aliphatic dicarboxylic acid unit represented by the above formula (2) in which $R^2$ is an aromatic group, is preferable.

The aromatic diol unit represented by formula (1) and the aromatic dicarboxylic acid unit represented by formula (2) in which $R^2$ is an aliphatic hydrocarbon group are as described above. Further, the aliphatic polyester preferable as the aliphatic-aromatic polyester (B) is also as described above.

The aliphatic-aromatic polyester resin (B) may contain aromatic diol units. Namely, the aliphatic-aromatic polyester resin (B) may be a polyester resin containing aromatic diol units and aliphatic dicarboxylic acid units; aromatic diol units, aliphatic dicarboxylic acid units, and aromatic dicarboxylic acid units; aliphatic diol units, aromatic diol units, and aromatic dicarboxylic acid units; aliphatic diol unit, aromatic diol unit, aliphatic dicarboxylic acid unit, and aromatic dicarboxylic acid unit. Note that specific examples of the aromatic diol component are as described above.

As the aliphatic-aromatic polyester resin (B), it is preferable to use an aromatic dicarboxylic acid component as a component providing an aromatic compound unit, and in this case, the content of the aromatic dicarboxylic acid unit is preferably 10 mol% or more, and on the other hand, it is preferably 80 mol% or less, and preferably 60 mol% or less, more preferably at most 50 mol%, particularly preferably 30% or less, and most preferably 20% or less, based on the total amount of units and aromatic dicarboxylic acid units (100 mol%).

As the aromatic dicarboxylic acid unit, it is preferable to use terephthalic acid or 2,5-furandicarboxylic acid. Specifically, as the aliphatic-aromatic polyester resin (B), polybutylene terephthalate resins such as polybutylene adipate terephthalate (PBAT), polybutylene succinate terephthalate (PBST), polybutylene sebacate terephthalate (PBSeT), polybutylene azelate terephthalate (PBAzT), and polybutylene brassylate terephthalate (PBBrT) , and polyfurandicarboxylate resins such as polybutylene adipate furanoate (PBAF), polybutylene succinate furanoate (PBSF), polybutylene sebacate furanoate (PBSeF), and polybutylene succinate sebacate furanoate (PBSSeF).

As the aliphatic-aromatic polyester resin (B), resins having succinic acid, adipic acid, and sebacic acid as dicarboxylic acid units are preferred. Therefore, as the aliphatic-aromatic polyester resin (B), polybutylene succinate resins such as PBST, PBSF, and PBSSeF; polybutylene adipate resins such as PBAT, PBAF, and PBASeF; polybutylene

sebacate resins such as PBSeT and PBSeF; polybutylene azelate resins such as PBAzT (polybutylene azelate terephthalate) and PBAzF (polybutylene azelate furanoate), are preferred, and polybutylene succinate-aromatic dicarboxylic acid resins such as PBST, PBSF, and PBSSeF are more preferred.

(Aromatic polyester resin (C))

The aromatic polyester resin (polyarylate) (C) is a resin in which the repeating units of the above-mentioned aliphatic polyester resin (A) are replaced with aromatic compound units.

As the aromatic polyester resin (C), aromatic polyester resins containing aromatic diol unit which may be contained in the above-described aliphatic-aromatic polyester resin (B) and aromatic dicarboxylic acid unit represented by the above formula (2) in which $R^2$ is an aromatic hydrocarbon group; aromatic polyester resins containing aromatic diol unit which may be contained in the aliphatic-aromatic polyester resin (B), aromatic dicarboxylic acid unit represented by the above-described formula (2) in which $R^2$ is aromatic hydrocarbon group, aromatic oxycarboxylic acid unit which may be contained in the aliphatic-aromatic polyester resin (B), and the like are preferred.

Each unit contained in the aromatic polyester resin (C) is as described above. Among aliphatic polyester resin (A), aliphatic-aromatic polyester resin (B), and aromatic polyester resin (C), aliphatic polyester resin and aliphatic-aromatic polyester resin are preferred, and aliphatic polyester resin is more preferred, because of their ease of biodegradability.

(Trifunctional or higher functional units)

The polyester resin may be a resin in which the melt viscosity is increased by copolymerizing trifunctional or higher aliphatic polyhydric alcohol with trifunctional or higher functional aliphatic polycarboxylic acid or its acid anhydride or trifunctional or higher functional aliphatic polycarboxylic acid component. When these copolymerization components are used, one type may be used alone, or two or more types may be used in any combination and ratio.

Specific examples of trifunctional aliphatic polyhydric alcohols include trimethylol propane, glycerin, and the like. Specific examples of tetrafunctional aliphatic polyhydric alcohols include pentaerythritol, and the like.

Specific examples of the trifunctional aliphatic polycarboxylic acid or its acid anhydride include propanetricarboxylic acid or its acid anhydride. Specific examples of the tetrafunctional polyhydric carboxylic acid or its acid anhydride include cyclopentanetetracarboxylic acid or its acid anhydride.

In addition, trifunctional aliphatic oxycarboxylic acids are broadly classified into two types: (i) a type having two carboxyl groups and one hydroxyl group in the same molecule, and (ii) a type having one carboxyl group and two hydroxyl groups. Any type can be used, however from the viewpoint of moldability, mechanical strength, appearance of the molded article, etc., (i) a type having two carboxyl groups and one hydroxyl group in the same molecule, such as malic acid, is preferred, and malic acid is more preferred.

In addition, the tetrafunctional aliphatic oxycarboxylic acid components broadly classified into (i) a type sharing three carboxyl groups and one hydroxyl group in the same molecule, and (ii) a type sharing two carboxyl groups and two hydroxyl groups, (iii) a type sharing three hydroxyl groups and one carboxyl group in the same molecule. Although any type can be used, those having a plurality of carboxyl groups are preferred, and citric acid and tartaric acid are more preferred. One type of these may be used alone, or two or more types may be used in any combination and ratio.

When the polyester resin contains a constituent unit derived from the above-mentioned trifunctional or higher functional component, the content thereof is preferably 0.01 mol% or more as the amount contained in all the structural units constituting the polyester resin, and on the other hand, it is preferably 5 mol% or less, more preferably 2.5 mol% or less. Note that the polyester resin does not need to contain the constituent unit derived from the above-mentioned trifunctional or higher functional components.

(Manufacturing method of polyester resin)

For the production of polyester resins containing diol units and dicarboxylic acid units, known methods for the production of polyester resins can be employed. Moreover, the polycondensation reaction at this time can be set under suitable conditions which are conventionally employed, and is not particularly limited. Usually, a method, in which the degree of polymerization is further increased by performing a pressure reduction operation after the esterification reaction was proceeded, is employed.

When reacting a diol component to form a diol unit and a dicarboxylic acid component to form a dicarboxylic acid unit during the production of polyester resin, the amounts of diol and dicarboxylic acid components used should be adjusted so that the polyester resin produced has the desired composition. The diol component and the dicarboxylic acid component usually react in substantially equimolar amounts, however the diol unit is usually used in excess of the dicarboxylic acid component by 1 mol% to 20 mol% since it is distilled out during the esterification reaction.

When copolymerizing polyester resin with components such as polyfunctional component units, the corresponding compounds (monomers or oligomers) must be reacted with each polyfunctional component unit so as to obtain the desired composition. At this time, there are no limitation on the timing or method of introducing these components into the reaction system, and any method may be used as long as the polyester resin can be produced.

The timing of introduction of the compound forming the polyfunctional component unit into the polyester resin may be prepared at the same time as other monomers or oligomers at the initial stage of polymerization, or after the transesterification reaction and before starting pressure reduction, however it is preferable to be prepared simultaneously with other monomers or oligomers from the viewpoint of simplifying the process.

Polyester resins are usually produced in the presence of a catalyst. As the catalyst, any known catalyst that can be used for producing polyester resins can be selected as long as it does not significantly impair the effects of the present invention. For example, metal compounds such as germanium, titanium, zirconium, hafnium, antimony, tin, magnesium, calcium, and zinc are suitable. Among these, germanium compounds and titanium compounds are preferred.

Examples of germanium compounds that can be used as catalysts include organic germanium compounds such as tetraalkoxygermanium, and inorganic germanium compounds such as germanium oxide and germanium chloride. Among these, germanium oxide, tetraethoxygermanium, tetrabutoxygermanium, and the like are preferred, and germanium oxide is particularly preferred from the viewpoint of price, ease of availability and the like.

Examples of titanium compounds that can be used as catalysts include organic titanium compounds such as tetraalkoxytitanium such as tetrapropyl titanate, tetrabutyl titanate, and tetraphenyl titanate. Among these, tetrapropyl titanate, tetrabutyl titanate, and the like are preferred from the viewpoint of price, ease of availability, and the like.

Further, as long as the purpose of the present invention is not impaired, other catalysts may be used in combination. Only one type of catalyst may be used alone, or two or more types may be used in any combination and ratio.

The amount of the catalyst used is arbitrary as long as it does not significantly impair the effects of the present invention, but it is usually 0.0005% by weight or more, more preferably 0.001% by weight or more, and usually 3% by weight or more, preferably 1.5% by weight or less, based on the amount of monomers used. By controlling the amount of catalyst within the above range, a sufficient catalytic effect can be obtained while reducing manufacturing costs, and coloration and decrease in hydrolysis resistance of the resulting polymer can be suppressed.

The timing of introduction of the catalyst is not particularly limited as long as it is before the polycondensation reaction, and it may be introduced at the time of charging the raw materials or at the start of pressure reduction.

The reaction conditions such as temperature, polymerization time, pressure during the esterification reaction and/or transesterification reaction of the dicarboxylic acid component with the diol component are arbitrary as long as they do not significantly impair the effects of the present invention. However, the reaction temperature of the esterification reaction and/or transesterification reaction of the dicarboxylic acid component with the diol component is usually 150°C or higher, preferably 180°C or higher, and usually 260°C or lower, preferably 250°C or lower. Further, the reaction atmosphere is usually an inert atmosphere such as nitrogen or argon. The reaction pressure is usually normal pressure to 10 kPa, however among these, normal pressure is preferred. Further, the reaction time is usually 1 hour or more, and usually 10 hours or less, preferably 6 hours or less, and more preferably 4 hours or less. By setting the reaction conditions within the above range, gelation due to excessive production of unsaturated bonds can be suppressed, and the degree of polymerization can be controlled.

Further, the pressure in the polycondensation reaction after the esterification reaction and/or transesterification reaction of the dicarboxylic acid component with the diol component is usually carried out under a vacuum degree of $0.01 \times 10^3$ Pa or more, preferably $0.03 \times 10^3$ Pa or more, and usually $1.4 \times 10^3$ Pa, preferably $0.4 \times 10^3$ Pa or less. Further, the reaction temperature at this time is usually 150°C or higher, preferably 180°C or higher, and usually 260°C or lower, preferably 250°C or lower. Further, the reaction time is usually 2 hours or more, and usually 15 hours or less, preferably 10 hours or less. By setting the reaction conditions within the above range, gelation due to excessive production of unsaturated bonds can be suppressed, and the degree of polymerization can be controlled.

Chain extenders such as carbonate compounds and diisocyanate compounds can also be used during manufacturing polyester resin. In this case, the amount of the chain extender is usually 10 mol% or less, preferably 5 mol% or less, more preferably 3 mol% as a ratio of carbonate bonds or urethane bonds with respect to all constituent units constituting polyester resin. Furthermore, from the viewpoint of biodegradability of the biodegradable resin composition according to the present embodiment, the carbonate bond is preferably less than 1 mol%, more preferably 0.5 mol% or less, and still more preferably 0.1 mol% or less, with respect to all constituent units constituting polyester resin. The urethane bond is preferably 0.5 mol% or less, more preferably 0.3 mol% or less, still more preferably 0.12 mol% or less, and particularly preferably 0.05 mol% or less. When this amount is converted to weight % with respect to polyester resin composition, it is preferably 0.9 weight % or less, more preferably 0.5 weight % or less, still more preferably 0.2 weight % or less, and particularly preferably 0.1 weight % or less. In particular, by setting the amount of urethane bonds within the above range, smoke and odor caused by the decomposition of urethane bonds can be suppressed during the film forming process, and film breakage due to foaming in the molten film can be suppressed, therefore molding stability can be ensured. The amount of carbonate bond or urethane bond in the polyester resin can be calculated from the results

of measurement by NMR methods (nuclear magnetic resonance spectroscopy) such as $^1H$-NMR and $^{13}C$-NMR methods.

Specific examples of carbonate compounds as chain extenders include diphenyl carbonate, ditolyl carbonate, bis(chlorophenyl) carbonate, m-cresyl carbonate, dinaphthyl carbonate, dimethyl carbonate, diethyl carbonate, dibutyl carbonate, ethylene carbonate, diamyl carbonate, dicyclohexyl carbonate and the like. In addition, carbonate compounds derived from hydroxy compounds such as phenols and alcohols can also be used.

Specifically, the diisocyanate compound includes known diisocyanates such as 2,4-tolylene diisocyanate, a mixture of 2,4-tolylene diisocyanate and 2,6-tolylene diisocyanate, 1,5-naphthylene diisocyanate, xylylene diisocyanate, hydrogenated xylylene diisocyanate, hexamethylene diisocyanate, isophorone diisocyanate, 4,4'-dicyclohexylmethane diisocyanate, tetramethylxylylene diisocyanate, 2,4,6-triisopropylphenyl diisocyanate, 4,4'-diphenylmethane diisocyanate, and tolidine diisocyanate.

Further, as other chain extenders, dioxazoline, silicate ester, and the like may be used.

Specific examples of the silicate ester include tetramethoxysilane, dimethoxydiphenylsilane, dimethoxydimethylsilane, diphenyldihydroxysilane, and the like.

High molecular weight polyester resins using these chain extenders (coupling agents) can also be produced using conventionally known techniques. After completion of polycondensation, the chain extender is usually added to the reaction system in a uniform molten state without a solvent, and reacted with the polyester obtained by polycondensation.

More specifically, a polyester resin with a higher molecular weight can be obtained by catalytic reaction of a chain extender with a polyester resin whose terminal group substantially has a hydroxyl group, which is obtained by catalytically reacting a diol component and a dicarboxylic acid component. Since prepolymers with a weight-average molecular weight of 20,000 or more are unaffected by residual catalyst even under severe conditions such as in the molten state by using a small amount of chain extender and gels are not formed during the reaction, a polyester resin with high molecular weight can be produced. Here, the weight-average molecular weight (Mw) of the polyester resin is determined as an equivalent value by monodisperse polystyrene from a measured value by gel permeation chromatography (GPC) using chloroform as a solvent and a measurement temperature of 40° C.

Therefore, for example, when the above-mentioned diisocyanate compound is used as a chain extender to further increase the molecular weight of the polyester resin, the weight-average molecular weight of the prepolymer is preferably 20,000 or more, more preferably 40,000 or more. When the weight-average molecular weight is high, only a small amount of diisocyanate compound is needed to increase the molecular weight, so that heat resistance is less likely to deteriorate. In this way, a polyester resin having urethane bonds having a linear structure chained via urethane bonds derived from the diisocyanate compound is produced.

The pressure during chain extension is preferably 0.01 MPa or more, more preferably 0.05 MPa or more, and even more preferably 0.07 MPa or more. Further, on the other hand, the pressure during chain extension is preferably 1 MPa or less, more preferably 0.5 MPa or less, and even more preferably 0.3 MPa or less. The pressure during chain extension is most preferably normal pressure.

The reaction temperature during chain extension is preferably 100°C or higher, more preferably 150°C or higher, even more preferably 190°C or higher, and particularly preferably 200°C or higher. Further, on the other hand, the reaction temperature during chain extension is preferably 250°C or lower, more preferably 240°C or lower, even more preferably 230°C or lower. By setting the reaction temperature within the above range, the reaction solution is maintained at an appropriate viscosity, therefore, it is possible to react uniformly, and stir the reaction solution sufficiently without requiring high stirring power, and gelation or decomposition of the polyester resin can be suppressed.

The time for carrying out the chain extension reaction is preferably 0.1 minutes or more, more preferably 1 minute or more, and even more preferably 5 minutes or more. On the other hand, the time for carrying out the chain extension reaction is preferably 5 hours or less, more preferably 1 hour or less, even more preferably 30 minutes or less, and particularly preferably 15 minutes or less. By setting the chain extension time within the above range, the chain can be extended to a desired molecular weight, and gelation or decomposition of the polyester resin can be suppressed.

The polyester resin contained in the biodegradable resin composition according to the present embodiment may use one type of each constituent unit, or two or more types in any combination and ratio, and polyester resins having three or more types of component units are preferred, and polyester resins having two or more types of dicarboxylic acid units and one or more diol units are more preferred. In addition, the diol units and dicarboxylic acid units may be derived from either compounds derived from petroleum raw materials or compounds derived from plant raw materials, however, compounds derived from plant materials are desired since they can take environmental problems into consideration.

In addition, when an optical isomer exists in the aromatic compound component providing the aromatic compound unit, any of the D form, L form, and racemic form may be used. Further, the aromatic compound component is not limited to the above examples as long as an aromatic compound unit can be provided. Only one type of aromatic compound component may be used alone, or two or more types may be used in any combination and ratio.

<Physical property of polyester resin>

It is preferable that the glass transition temperature (Tg) of the polyester resin according to the present invention is 40°C or lower. When biodegrading polyester resin, it is considered that since the glass transition temperature is lower than the temperature of the environment in which the polyester resin is placed, such as in seawater, the crystal structure of polyester resin becomes loose, allowing the molecular main chain to rotate and vibrate, making it easier to biodegrade. Therefore, the glass transition temperature of the polyester resin is more preferably 30°C or lower, even more preferably 25°C or lower, particularly preferably 20°C or lower, significantly preferably 0°C or lower, and most preferably -20°C or lower. Further, from the viewpoint of ease of molding, the lower limit is preferably -100°C or higher, more preferably -60°C or higher, and even more preferably -40°C or higher. Note that the glass transition temperature can be measured by the following method.

10 mg of each resin was placed in an aluminum sample container to serve as a measurement sample. Next, using DSC, the temperature is raised from -100°C to 160°C at a rate of 10°C/min in a nitrogen atmosphere to obtain a DSC chart. In this chart, the glass transition temperature is determined from the baseline shift that exists on the lower temperature side than the peak indicating the melting point. Specifically, the intersection point of the base line on the low temperature side and the contact point of the inflection point is defined as the glass transition temperature.

The acid value of the polyester resin according to the present invention is preferably 250 eq/t or less. When the acid value of the polyester resin is low, the hydrolysis is difficult to occur, resulting in excellent storage stability. Therefore, the acid value of the polyester resin is more preferably 100 eq/t or less, even more preferably 80 eq/t or less, particularly preferably 50 eq/t or less, further preferably 40 eq/t or less, and most preferably 30 eq/t or less. The acid value of the polyester resin is usually 19 eq/t or more, preferably 20 eq/t or more, more preferably 23 eq/t or more, even more preferably 26 eq/t or more, particularly preferably 28 eq/t or more, and most preferably 29 eq/t or more. Note that the acid value can be measured by the following method.

0.4 g of the resin was accurately weighed, 25 mL of benzyl alcohol was added thereto, and the mixture was dissolved by heating to 195°C and stirring. Once the resin was dissolved, the container containing the resin solution is cooled in an ice bath, and 2 mL of ethanol was added into the container. Titration is performed using a 0.01N sodium hydroxide benzyl alcohol solution (the titration amount is A (ml)).

Next, a similar measurement was performed using only benzyl alcohol, and a blank value (B (ml)) was obtained. The acid value is calculated by using the following formula.

$$\text{Terminal acid value (eq/t)} = (A\text{-}B) \times F \times 10/W$$

A (ml): Measured titration amount
B (ml): Blank titration amount
F: 0.01N Factor of NaOH benzyl alcohol solution
W (g): Sample weight

The reduced viscosity $\eta_{sp}/c$ of the polyester resin of the present invention at 30°C is preferably 0.5 dL/g or higher. The reduced viscosity of the polyester resin may be appropriately selected depending on the application, molding method, and the like. Specifically, the reduced viscosity of the resin at 30°C is more preferably 0.8 dL/g or more, even more preferably 1.0 dL/g or more, and particularly preferably 1.2 dL/g or more, especially preferably 1.5 dL/g or more, most preferably 1.8 dL/g or more, and on the other hand, it is preferably 4.0 dL/g or less, more preferably 3.0 dL/g or less, even more preferably 2.5 dL/g or less, particularly preferably 2.3 dL/g or less, and most preferably 1.9 dL/g or less.

By setting the reduced viscosity of the polyester resin within the above range, it is possible to ensure mechanical properties when processing into a shaped object, and the melt viscosity of the biodegradable resin composition during molding is such that it does not impose an excessive load on a molding machine such as an extruder or an injection machine, and productivity can also be ensured.

The reduced viscosity of polyester resin can usually be measured by the following method. First, a resin is dissolved in a solvent to prepare a resin solution having a concentration of c (g/dL). Next, using a capillary viscometer (Ubbelohde viscometer), the passage time $t_0$ of the solvent and the passage time t of the resin solution were measured at a condition of temperature of 30.0°C ± 0.1 °C, and based on the following formula (i) to calculate the relative viscosity $\eta_{rel}$. Then, from the relative viscosity $\eta_{rel}$, the specific viscosity $\eta_{sp}$ is determined based on the following equation (ii).

$$\eta_{rel} = t/t_0 \cdots (i)$$

$$\eta_{sp} = \eta_{rel} - 1 \cdots (ii)$$

By dividing the obtained specific viscosity $\eta_{sp}$ by the concentration c (g/dL), the reduced viscosity $\eta_{sp}/c$ can be determined. Note that normally, the higher this value, the greater the molecular weight.

The molecular weight of the polyester resin according to the present invention is usually measured by gel permeation chromatography (GPC). From the viewpoint of moldability and mechanical strength, the resin contained in the biodegradable resin composition according to the present embodiment preferably has a weight-average molecular weight (Mw) in the following range using monodisperse polystyrene as a standard material. Namely, the molecular weight of the resin is preferably 50,000 or more, more preferably 80,000 or more, even more preferably 100,000 or more, and particularly preferably 150,000 or more, most preferably 160,000 or more. Furthermore, on the other hand, it is preferably 1,000,000 or less, more preferably 500,000 or less, even more preferably 400,000 or less, particularly preferably 300,000 or less, especially preferably 200,000 or less, more preferably 180,000 or more, and most preferably 170,000 or less.

The melt flow rate (MFR) of polyester resin according to the present invention can be evaluated by a value measured at 190°C and a load of 2.16 kg based on JIS K 7210 (1999). From the viewpoint of moldability and mechanical strength, MFR of the resin contained in the biodegradable resin composition according to the present embodiment preferably is preferably in the following range. Specifically, it is preferably 0.1 g/10 minutes or more, and more preferably 1 g/10 minutes or more. Furthermore, on the other hand, MFR of the resin is preferably 100 g/10 minutes or less, more preferably 80 g/10 minutes or less, still more preferably 50 g/10 minutes or less, particularly preferably 40 g/10 minutes or less, and most preferably 30 g/10 minutes or less. Note that the MFR of the resin can be adjusted by adjusting the molecular weight and the like.

By setting the melting point of the polyester resin according to the present invention within the following range, good moldability can be ensured. Namely, the melting point of the resin is preferably 60°C or more, more preferably 70°C or more, even more preferably 75°C or more, particularly preferably 80°C or more, and on the other hand, it is preferably 270°C or less, more preferably 200°C or less, even more preferably 150°C or less, particularly preferably 140°C or less, especially preferably 130°C or less, and most preferably 100°C or less. Note that, when the resin has a plurality of melting points, it is preferable that at least one melting point is within the above range.

In addition, the entropy of melting ($\Delta$Hm) of the polyester resin according to the present invention is preferably 20 mJ/mg or more, more preferably 30 mJ/mg or more, and even more preferably 35 mJ/mg or more, still more preferably 40 mJ/mg or more, further more preferably 60 mJ/mg or more, particularly preferably 80 mJ/mg or more, most preferably 90 mJ/mg or more, from the viewpoint that both moldability and biodegradability can be achieved. Furthermore, it is usually 300 mJ/mg or less, more preferably 200 mJ/mg or less, even more preferably 100 mJ/mg or less, still more preferably 70 mJ/mg or less, particularly preferably 60 mJ/mg or less, most preferably 40 mJ/mg or less.

The tensile modulus of the polyester resin according to the present invention is preferably 30 MPa or more, more preferably 70 MPa or more, even more preferably 100 MPa or more, particularly preferably 150 MPa or more, since good moldability and impact resistance strength can be ensured, and on the other hand, it is preferably 900 MPa or less, more preferably 800 MPa or less, even more preferably 600 MPa or less, particularly preferably 500 MPa or less, more preferably 300 MPa or less, most preferably 280 MPa or less. There is no particular limitation, as long as the biodegradability is improved by forming a resin composition with compounds such as nitrogen compound (I) and (II), and resins made of resins other than the above-mentioned preferred resins may also be used. Note that the tensile modulus is measured by a method based on JIS K 7127:1999. Specifically, heat press sheets of each resin are produced as follows. A metal frame which is subjected to a surface release treatment, is placed on a 150 mm × 150 mm PTFE tape, 1.6 g of the resin is measured and taken inside this metal frame, and a 150 mm × 150 mm PTFE tape is placed on it. The resin sandwiched between the PTFF tapes was placed between two iron plates (160 mm × 160 mm, 3 mm thickness) and then heat pressed using a heat press machine, followed by cooling press using a cooling press machine to obtain a heat press sheet of 70 mm × 70 mm × 0.2mm thickness. Here, the heat press temperature is 180°C, and the hot press time is 2 minutes for preheating and 2 minutes for pressing. Further, the cooling press temperature is 20°C, and the cooling press time is 2 minutes. The obtained heat press sheet is produced and punched into a No. 8 dumbbell type to produce a test piece. This test piece is uniaxially stretched at a rate of 50 mm/min, and the initial slope of the resulting stress-strain curve is determined as the tensile modulus. Further, the tensile elongation at break of the polyester resin related to the present invention is preferably 200% or more, more preferably 400% or more, even more preferably 500% or more, particularly preferably 700% or more, and most preferably 800% or more, since good processability can be ensured. Further, from the viewpoint of ease of handling, the elongation is preferably 20,000% or less, more preferably 1,500% or less, even more preferably 1,300% or less, particularly preferably 1,000% or less, and most preferably 900% or less. Note that the tensile elongation at break is measured by a method based on JIS K 7127. Specifically, similarly to the tensile modulus measurement, a test piece was punched into a No. 8 dumbbell type, and this test piece was uniaxially stretched at a temperature of 23°C and a test speed of 50 mm/min to measure the tensile elongation at break.

[Other components]

The biodegradable resin composition according to the present embodiment includes other additives such as filler, plasticizer, antistatic agent, antioxidant, light stabilizer, ultraviolet absorber, dye, pigment, hydrolysis inhibitor, crystal nucleating agent, anti-blocking agent, weathering agent, heat stabilizer, flame retardant, mold release agent, antifogging agent, surface wetting improvers, incineration aids, dispersion aids, various surfactants, slip agents, freshness preserving agent, antibacterial agents, as long as the effect of the present invention is not significantly impaired. When these components are included, the component may contain only one type or two or more types.

When the other components are included in the biodegradable resin composition, their content is preferably 40% by weight or less, more preferably 20% by weight or less, even more preferably 10% by weight or less, particularly preferably 5% by weight or less, based on the total amount of the biodegradable resin composition, from the viewpoint of not impairing the properties of the biodegradable resin composition. Note that the lower limit of the content of other components is not particularly limited.

[Method of producing biodegradable resin composition]

A method of producing biodegradable resin composition of the present embodiment is particularly limited. The biodegradable resin composition according to the present embodiment is obtained by mixing a resin, compounds such as nitrogen compounds (I) and (II), and other resins and other components as necessary. The production of the biodegradable resin composition can be performed by, for example, mixing each component in a predetermined ratio at the same time or in any order using a mixer such as a tumbler, V-type blender, Nauta mixer, Banbury mixer, kneading roll, and extruder, and can be more preferably performed by further melt-kneading. Alternatively, it can also be produced by dissolving or dispersing a resin and a compound such as nitrogen compound (I) or (II) in a solvent and removing the solvent.

From the viewpoint of improving the biodegradability and biodegradation rate of the biodegradable resin composition, especially the initial biodegradation rate, it is preferably that the compounds such as nitrogen compounds (I) and (II), etc. are uniformly dispersed in the biodegradable resin composition. Therefore, the biodegradable resin composition is preferably manufactured by kneading, and more preferably by melt-kneading.

The kneader used for kneading may be a melt kneader. Further, the extruder may be either a twin-screw extruder or a single-screw extruder, but a twin-screw extruder is more preferable.

When performing melt-kneading, the melt-kneading temperature is preferably 80°C or higher, more preferably 100°C or higher, and, on the other hand, preferably 220°C or lower, more preferably 210°C or lower. Within this temperature range, melt-kneading can be carried out in a short time, and deterioration of color tone due to deterioration of the resin or carbonization of compounds such as nitrogen compounds (I) and (II) is unlikely to occur, and likely to provide a resin composition having excellent physical properties such as impact resistance and heat and humidity resistance.

The melt-kneading time is not particularly limited as long as the compounds such as nitrogen compounds (I) and (II) can be uniformly dispersed in the biodegradable resin, however, similarly, it is desirable to carry out the process in a short period of time, since deterioration of the resin is unlikely to occur. Specifically, the melt-kneading time is preferably 10 seconds or more, more preferably 30 seconds or more, and on the other hand, preferably 20 minutes or less, more preferably 15 minutes or less.

[Biodegradability of biodegradable resin composition]

The biodegradable resin composition according to this embodiment has biodegradability. The resin composition of the present invention particularly preferably has biodegradability in seawater, where the resin is difficult to biodegrade (marine biodegradable resin composition). The reason why the resin composition of the present invention exhibits biodegradability even in seawater is assumed to be as follows. Normally, the amount and types of microorganisms in seawater are low. For this reason, it is difficult for molds to grow in seawater, and it is assumed that biofilm formation is important for biodegradation in seawater. Furthermore, in seawater, nitrogen which is an element essential for life, is deficient. Therefore, it is assumed that the presence of low-molecular nitrogen compounds such as polyamines causes cell proliferation and activation of microorganisms in seawater, promotes biofilm formation, and promotes biodegradability.

Furthermore, when the temperature of the resin exceeds the glass transition temperature, the molecular chains of the resin tend to move. Therefore, it is assumed that resins with low glass transition temperatures are easily biodegradable. In particular, it is considered that when the glass transition temperature of the resin is 40°C or lower, it is more likely to be biodegraded by compounds such as nitrogen compounds (I) and (II) in seawater.

In this description, the biodegradability was calculated as the ratio of biochemical oxygen demand (BOD) to theoretical oxygen demand (ThOD).

For example, regarding biodegradation in seawater, it was measured in accordance with ISO 14851:1999

(Determination of the ultimate aerobic biodegradability of plastic materials in an aqueous medium-Method by analysis of evolved carbon dioxide in a closed respirometer), and regarding biodegradation in soil, it was measured in accordance with ISO 17556:2003 (Plastics-Determination of the ultimate aerobic biodegradability of plastic materials in soil by measuring the oxygen demand in a respirometer or the amount of carbon dioxide evolved).

The biodegradable resin composition according to the present embodiment preferably has the biodegradability which may exceed 1.0 times the biodegradability of the composition (hereinafter, this may be referred to as the "reference composition") obtained by removing the above-mentioned compounds such as nitrogen compound (I) and (II) from the biodegradable resin composition according to the present embodiment (hereinafter, the rate of increase in biodegradability relative to the biodegradability of the reference composition may be referred to as "biodegradation improvement degree"). Specifically, on the 15th day after the start of the biodegradability test in accordance with the above standards, the biodegradation improvement degree of the biodegradable resin composition according to the present embodiment is more preferably 1.1 times or more, even more preferably 1.6 times or more, particularly preferably 2.0 times or more, further more preferably 2.8 times or more, particularly preferably 3.4 times or more, most preferably 10.0 times or more.

In this description, "high biodegradability" means that the biodegradation improvement degree of the biodegradable resin composition at any time after the start of the biodegradability test is 1.6 times or more, 2.0 times or more, 2.8 times or more, 3.4 times or more, or 10.0 times or more.

[Biodegradation method of polyester resin]

A biodegradation method of polyester resin of the present invention is characterized by that a glass transition temperature of the polyester resin is 40°C or lower, and the polyester resin is biodegraded in seawater in the presence of one or more compounds selected from nitrogen compounds represented by the following general formula (I) and salts thereof having a molecular weight of less than 10000.

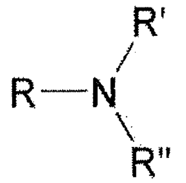

(I)

(in the formula, R, R', and R" each independently represent a hydrogen atom or a monovalent organic group which may have a substituent group which does not form a ring structure with each other).

Here, the polyester resin, compounds such as nitrogen compound (I), etc. suitable for this method are as described above.

[Shaped object]

The biodegradable resin composition according to this embodiment can be molded by various molding methods applied to general-purpose plastics. Molding methods include, for example, compression molding (compression molding, lamination molding, stampable molding), injection molding, extrusion molding, coextrusion molding (film molding by inflation method or T-die method, laminate molding, pipe molding, wire/cable molding, molding of profile), heat press molding, blow molding (various blow molding), calendar molding, solid molding (uniaxial stretch molding, biaxial stretch molding, roll rolling molding, stretch oriented nonwoven fabric molding, thermoforming (vacuum forming, air pressure molding), plastic processing, powder molding (rotational molding), various nonwoven fabric moldings (dry method, adhesive method, entanglement method, spunbond method, etc.)). Among these, injection molding, extrusion molding, compression molding, or heat press molding is preferably applied, and injection molding or extrusion molding is more preferably applied. As for specific shapes, application to sheets, films, and containers is preferred.

It is also possible to apply various secondary processes to the shaped object formed by molding the biodegradable resin composition according to this embodiment, for the purpose of imparting surface functions such as chemical functions, electrical functions, magnetic functions, mechanical functions, friction/wear/lubrication functions, optical functions, thermal functions, biocompatibility, etc. Examples of secondary processing include embossing, painting, adhesion, printing, metallization (plating, etc.), machining, surface treatment (antistatic treatment, corona discharge treatment, plasma treatment, photochromism treatment, physical vapor deposition, chemical vapor deposition, coating, etc.).

[Application]

The biodegradable resin composition according to the present embodiment can be suitably used in a wide

range of applications, including packaging materials for packaging various foods, medicines, and miscellaneous goods liquids, powders, solids, and the like, agricultural materials, and construction materials, and the like. Specific applications include injection molded products (for example, fresh food trays, fast food containers, coffee capsule containers, cutlery, outdoor leisure products, etc.), extrusion shaped object (for example, films, sheets, fishing lines, fishing nets, vegetation nets, sheets for secondary processing, water retention sheets, etc.), hollow molded bodies (bottles, etc.), and the like. In addition, other agricultural films, coating materials, fertilizer coating materials, seedling pots, laminate films, boards, stretched sheets, monofilaments, nonwoven fabrics, flat yarns, staples, crimped fibers, striped tapes, split yarns, composite fibers, Blow bottles, shopping bags, garbage bags, compost bags, cosmetic containers, detergent containers, bleach containers, ropes, binding materials, sanitary cover stock materials, cold boxes, cushioning films, multifilaments, synthetic paper, surgical threads, sutures, artificial bones, artificial skin, which are for medical use, DDS such as microcapsules, wound dressings, and the like are exemplified. The shaped object is particularly suitable as a food packaging film, a fresh food tray, a fast food container, a lunch box, and other food containers.

## Examples

Hereinafter, the content of the present invention will be explained in more detail using Examples and Comparative Examples. The present invention is not limited to the following examples without departing from the gist of the present invention. The values of various manufacturing conditions or evaluation results in the following examples have the meaning of preferable upper or lower limits in the embodiments of the present invention, and a preferable range may be a range defined by the above-mentioned upper limit value or lower limit value and the value of the following example or a combination of the values between the examples.

<Polyester resin>

(PBSSe)

1,4-butanediol (100.1 g), succinic acid (75.0 g), sebacic acid (32.1 g), trimethylolpropane (0.34 g) and titanium tetrabutoxide (0.50 g) were heated with stirring under nitrogen, at 200°C for 2 hours. Subsequently, the temperature was raised to 250°C under reduced pressure, and the resulting polymer was reacted for 5 hours and 15 minutes, and was extracted into water in the form of a strand and cut to obtain PBSSe in the form of pellets.

The reduced viscosity of PBSSe was measured according to the following measurement method and was found to be 1.8 dL/g. Further, the glass transition temperature was -30°C, and the acid value was 28 eq/t, which were each measured according to the following measuring method. The molar ratio (S/Se) of succinic acid units/sebacic acid units, obtained by $^1$H-NMR (nuclear magnetic resonance spectroscopy), was 80/20.

(PBSA)

BioPBS™ FD92PB (PTT MCC manufactured by Biochem)

The reduced viscosity of PBSA was measured according to the following measurement method and was found to be 2.3 dL/g. Further, the glass transition temperature was -40°C, and the acid value was 29 eq/t, which were each measured according to the following measuring method.

(PBSeT)

1,4-butanediol (85.10 g), sebacic acid (63.70 g), terephthalic acid (52.30 g), trimethylolpropane (0.27 g) and titanium tetrabutoxide (0.53 g) under nitrogen, The mixture was heated at 220°C for 2 hours with stirring. Subsequently, the temperature was raised to 240°C under reduced pressure, and the resulting polymer was reacted for 3 hours and 15 minutes, and was extracted into water in the form of a strand and cut to obtain PBSeT in the form of pellets. The molar ratio (S/Se) of units derived from the sebacic acid/units derived from terephthalic acid, obtained by $^1$H-NMR (nuclear magnetic resonance spectrum), was 50/50. Further, the reduced viscosity was 1.32 dL/g, the glass transition temperature was -40°C, and the acid value was 24 eq/t, which were each measured according to the following measuring method.

(PHBH)

Each measurement was performed using the biodegradable polymer "Green Planet ™ 151C" manufactured by Kaneka Corporation according to the following measurement method. The glass transition temperature was 0°C, and

the acid value was 18 eq/t.

(PLA)

Ingeo 4032D (manufactured by NatureWorks) was evaluated. The reduced viscosity was 2.18 dL/g, and the glass transition temperature was 55-60°C (catalog value).

<Compounds such as nitrogen compounds (I) and (II) etc.>

The compounds listed in Table 1 were used.

<Other compound>

Polyethyleneimine (weight-average molecular weight 66,000, concentration of nitrogen atom 33% by weight)
N,N'-ethylenebisoleinamide (molecular weight 588, concentration of nitrogen atom 5% by weight)
Glucose (molecular weight 180)
Starch

(Measuring method of reduced viscosity)

Resin was dissolved in a 1:1 (weight ratio) mixed solvent of phenol and tetrachloroethane at a concentration of 0.5 g/dL to prepare a resin solution. Next, the reduced viscosity of the resin solution at 30°C was measured using an Ubbelohde viscometer, and the reduced viscosity was calculated based on the result.

(Measuring method of glass transition temperature)

10 mg of each resin was placed in an aluminum sample container to serve as a measurement sample. Next, using "DSC6220" manufactured by Hitachi High-Tech Science Co., Ltd., the temperature is raised from -100°C to 160°C at a rate of 10°C/min in a nitrogen atmosphere to obtain a DSC chart. In this chart, the glass transition temperature is determined from the baseline shift that exists on the lower temperature side than the peak indicating the melting point. Specifically, the intersection point of the base line on the low temperature side and the contact point of the inflection point is defined as the glass transition temperature.

(Measuring method of acid value)

0.4 g of the resin was accurately weighed, 25 mL of benzyl alcohol was added thereto, and the mixture was dissolved by heating to 195°C and stirring. Once the resin was dissolved, the container containing the resin solution is cooled in an ice bath, and 2 mL of ethanol was added into the container. Titration was performed using a 0.01N benzyl alcohol solution of sodium hydroxide using an automatic titrator "GT200" manufactured by Mitsubishi Chemical Analytech Co., Ltd (the titration amount is defined as A (ml)).

Next, a similar measurement was performed using only benzyl alcohol, and a blank value (B (ml)) was obtained. The acid value was calculated by using the following formula.

$$\text{Terminal acid value (eq/t)} = (A\text{-}B) \times F \times 10/W$$

A (ml): Measured titration amount
B (ml): Blank titration amount
F: 0.01N Factor of NaOH benzyl alcohol solution
W (g): Sample weight

<Comparative example 1>

A pulverized resin was obtained by pulverizing PBSSe so as to have a particle size (sieving method) of 250 μm or less.

<Comparative example 4>

A pulverized resin was obtained by pulverizing PBSA so as to have a particle size (sieving method) of 250 μm or less.

(Comparative example 5>

A pulverized resin was obtained by pulverizing PBSeT so to have a particle size (sieving method) of 250 μm or less.

<Comparative example 6>

A pulverized resin was obtained by pulverizing PHBH so as to have a particle size (sieving method) of 250 μm or less.

<Examples 1 to 13, Reference example 1, Comparative examples 2, 3, 7, and 8>

The pulverized resin and compounds such as nitrogen compounds (I) and (II) etc., were mixed in the proportions shown in Table 1 so that the total amount was 30 mg.

<Examples 14, 15>

The pulverized resin and compounds such as nitrogen compounds (I) and (II) etc., were blended in the proportions shown in Table 1, and placed in a small twin-screw kneader ("Xplore MC15 Micro Compounder" manufactured by DSM) under a nitrogen atmosphere, and melt-kneaded for 3 minutes at 150°C. The biodegradable resin composition was obtained by pulverizing the obtained kneaded material so as to have a particle size (sieving method) of 250 μm or less.

<Measuring method of biodegradability>

The biodegradability of the resins or resin compositions obtained in Examples 1 to 13, Reference Example 1, and Comparative Examples 1 to 8 was measured in accordance with ISO 14851 as follows.

To a 510 mL brown bottle containing 30 mg of the sample, 100 mL of a mixture of standard test culture solution and seawater prepared in accordance with ISO 14851 was added. A pressure sensor (manufactured by WTW, OxiTop (registered trademark)-C type) was attached to a brown bottle, and the test solution was stirred with a stirrer for 15 days in a constant temperature environment of 25°C, and the biodegradability (%) was calculated based on BOD measurement. The biodegradability of the biodegradable resin was evaluated in terms of the improvement degree(times) in biodegradability when the nitrogen compound of the present invention were added. The results are shown in Table 1. In addition, in the table, the case of simply mixing was described as "addition".

Furthermore, the biodegradability of the resin compositions obtained in Examples 14 and 15 was measured as follows in the same manner as in Examples 1 to 13 in accordance with ISO 14851.

To a 510 mL brown bottle containing 30 mg of the sample, 100 mL of a mixture of standard test culture solution and seawater prepared in accordance with ISO 14851 was added. A pressure sensor (manufactured by WTW, OxiTop (registered trademark)-C type) was attached to a brown bottle, and the test solution was stirred with a stirrer for 20 days in a constant temperature environment of 25°C, and the biodegradability (%) was calculated based on BOD measurement. The biodegradability of the biodegradable resin was evaluated in terms of the improvement degree(times) in biodegradability when the nitrogen compound of the present invention were added. The results are shown in Table 1. In addition, in the table, when kneading was performed, it was described as "kneading".

Table 1

| | Resin | | | | |
|---|---|---|---|---|---|
| | Type | Reduced viscosity (dL/g) | Acid value (eq/t) | Glass transition temperature (°C) | Content in composition (weight %) |
| Example 1 | PBSSe | 1.8 | 28 | -30 | 90 |
| Example 2 | PBSSe | 1.8 | 28 | -30 | 90 |

(continued)

| | Resin | | | | |
|---|---|---|---|---|---|
| | Type | Reduced viscosity (dL/g) | Acid value (eq/t) | Glass transition temperature (°C) | Content in composition (weight %) |
| Example 3 | PBSSe | 1.8 | 28 | -30 | 90 |
| Example 4 | PBSSe | 1.8 | 28 | -30 | 90 |
| Example 5 | PBSSe | 1.8 | 28 | -30 | 90 |
| Example 6 | PBSA | 2.3 | 29 | -40 | 90 |
| Example 7 | PBSA | 2.3 | 29 | -40 | 90 |
| Example 8 | PBSA | 2.3 | 29 | -40 | 90 |
| Example 9 | PBSA | 2.3 | 29 | -40 | 90 |
| Example 10 | PBSA | 2.3 | 29 | -40 | 99 |
| Example 11 | PBSA | 2.3 | 29 | -40 | 99 |
| Example 12 | PBSA | 2.3 | 29 | -40 | 99 |
| Example 13 | PBSeT | 1.3 | 24 | -40 | 90 |
| Example 14 | PBSSe | 1.8 | 28 | -30 | 90 |
| Example 15 | PBSA | 2.3 | 29 | -40 | 90 |
| Reference example 1 | PHBH | - | 18 | 0 | 90 |
| Comparative Example 1 | PBSSe | 1.8 | 28 | -30 | 100 |
| Comparative Example 2 | PBSSe | 1.8 | 28 | -30 | 90 |
| Comparative Example 3 | PBSSe | 1.8 | 28 | -30 | 90 |
| Comparative Example 4 | PBSA | 2.3 | 29 | -40 | 100 |
| Comparative Example 5 | PBSeT | 1.3 | 24 | -40 | 100 |
| Comparative Example 6 | PHBH | - | 18 | 0 | 100 |
| Comparative Example 7 | PBSSe | 1.8 | 28 | -30 | 90 |
| Comparative Example 8 | PBSSe | 1.8 | 28 | -30 | 90 |

Table 1 (continued)

| | Compounds such as nitrogen compound (1) | | |
|---|---|---|---|
| | Compound name | Molecular weight | Concentration of nitrogen atom in compound (%) |
| Example 1 | Spermine tetrahydrochloride | 348.18 | 16 |
| Example 2 | Arginine | 174.21 | 32 |

(continued)

| | Compounds such as nitrogen compound (1) | | |
|---|---|---|---|
| | Compound name | Molecular weight | Concentration of nitrogen atom in compound (%) |
| Example 3 | Arginine | 174.21 | 32 |
| Example 4 | Arginine | 174.21 | 32 |
| Example 5 | Tetramethylenediamine dihydrochloride | 161.07 | 17 |
| Example 6 | Spermine tetrahydrochloride | 348.18 | 16 |
| Example 7 | Arginine | 174.21 | 32 |
| Example 8 | Asparagine | 132.12 | 21 |
| Example 9 | Serin | 105.09 | 13 |
| Example 10 | Arginine | 174.21 | 32 |
| Example 11 | Asparagine | 132.12 | 21 |
| Example 12 | Serin | 105.09 | 13 |
| Example 13 | Tetramethylenediamine dihydrochloride | 161.07 | 17 |
| Example 14 | Tetramethylenediamine dihydrochloride | 161.07 | 17 |
| Example 15 | Tetramethylenediamine dihydrochloride | 161.07 | 17 |
| Reference example 1 | Arginine | 174.21 | 32 |
| Comparative Example 1 | None | - | - |
| Comparative Example 2 | Polyethyleneimine | 66000 | 33 |
| Comparative Example 3 | N,N'-ethylenebisoleinamide | 588 | 5 |
| Comparative Example 4 | None | - | - |
| Comparative Example 5 | None | - | - |
| Comparative Example 6 | None | - | - |
| Comparative Example 7 | Glucose | 180 | 0 |
| Comparative Example 8 | Starch | - | 0 |

Table 1 (continued)

| | Composition | | |
|---|---|---|---|
| | Mixing method | Concentration of nitrogen atom (%) derived from compounds such as nitrogen compound (I) in the composition | Improvement of biodegradability (times) |
| Example 1 | Addition | 1.6 | 11.4 |
| Example 2 | Addition | 3.2 | 12.9 |
| Example 3 | Addition | 1.6 | 10.0 |
| Example 4 | Addition | 0.3 | 2.8 |
| Example 5 | Addition | 1.7 | 3.3 |
| Example 6 | Addition | 1.6 | 3.7 |
| Example 7 | Addition | 3.2 | 3.4 |
| Example 8 | Addition | 2.1 | 2.9 |
| Example 9 | Addition | 1.3 | 2.4 |
| Example 10 | Addition | 0.3 | 2.8 |
| Example 11 | Addition | 0.2 | 2.3 |
| Example 12 | Addition | 0.1 | 2.1 |
| Example 13 | Addition | 1.7 | 3.3 |
| Example 14 | Kneading | 1.7 | 4.7 |
| Example 15 | Kneading | 1.7 | 3.2 |
| Reference example 1 | Addition | 3.2 | 1.5 |
| Comparative Example 1 | - | - | 1.0 |
| Comparative Example 2 | Addition | 3.3 | 0.4 |
| Comparative Example 3 | Addition | 0.5 | 0.8 |
| Comparative Example 4 | - | - | 1.0 |
| Comparative Example 5 | - | - | 1.0 |
| Comparative Example 6 | - | - | 1.0 |
| Comparative Example 7 | Addition | 0 | 1.1 |
| Comparative Example 8 | Addition | 0 | 0.9 |

It was confirmed that the biodegradability of the resin was significantly improved by nitrogen compounds such as (I) and (II), from the comparison between Examples 1 to 5, 14 and Comparative Example 1, Comparison of Examples 6 to 12, 15 and Comparative Example 4, and Comparison of Example 13 and Comparative Example 5.

On the other hand, in Comparative Examples 2, 3, 7, and 8 containing compounds other than nitrogen compounds (I) and the like and (II), the biodegradability was rather reduced. Here, as the reasons why the biodegradability of polyethyleneimine decreased, it is considered that polyethyleneimine itself is difficult to biodegrade and the generation of the amino groups due to decomposition is unlikely to occur since polyethyleneimine has a large molecular weight,

that polyethyleneimine present near the surface of the biodegradable resin composition inhibited contact of the resin with microorganisms, and the like. Namely, it is considered that the biodegradability is improved, since the compounds such as the nitrogen compounds (I) and (II) etc., are likely to be biodegraded because of their small molecular weight, and the generation of amino groups due to decomposition are likely to occur, and compounds such as the nitrogen compounds (I) and (II) etc., present near the surface of the biodegradable resin composition are likely to interfere with the contact with microorganism. Furthermore, as the reason why the biodegradability was decreased or the degree of promotion was low for N,N'-ethylenebisoleinamide and glucose, it is considered that these compounds did not have a biodegradation promoting effect since they did not have a nitrogen atom, or even if they did have a nitrogen atom, the concentration was low. In particular, N,N'-ethylenebisoleinamide and starch, which is said to promote the biodegradability of resin in compost, actually decreased in seawater.

Regarding the content of compounds such as nitrogen compounds (I) and (II) etc., in the case of PBSSe, compared to Comparative example 1 which does not contain arginine, in the biodegradable resin composition of Example 4 whose content was 1% by weight, the biodegradability is 2.8 times higher, in the biodegradable resin composition of Example 3 whose content is 5% by weight, the biodegradability is 10.0 times higher, in the biodegradable resin composition of Example 2 whose content is 10% by weight, the biodegradability is 12.9 times higher.

In addition, in the case of PBSA, compared to Comparative Example 4 which does not contain asparagine, in the biodegradable resin composition of Example 11 whose content was 1 % by weight, the biodegradability was 2.3 times higher, in the biodegradable resin composition of Example 8 whose content was 10 % by weight, the biodegradability was 2.9 times higher.

In particular, as shown in Examples 14 and 15, for the biodegradable resin compositions obtained by kneading the resin and the compounds such as the nitrogen compounds (I) and (II) etc., it was found that their biodegradability were significantly improved by 3 to 5 times.

<Comparative example 9>

A pulverized resin was obtained by pulverizing PLA so as to have a particle size (sieving method) of 250 μm or less. The obtained pulverized resin and tetramethylene diamine dihydrochloride were mixed so as to have a total amount of 30 mg, at a ratio of 10 parts by weight of tetramethylene diamine dihydrochloride with respect to 100 parts by weight of the pulverized resin. The biodegradability of the obtained resin composition was measured in the same manner as in Example 1 and the like. As a result, the biodegradability (pressure change) of the resin composition decreased only by the amount of tetramethylenediamine dihydrochloride added.

Industrial Applicability

According to the present invention, it is possible to provide a biodegradable resin composition that has a high biodegradation rate and a high biodegradability, and particularly contributes greatly to solving environmental problems such as marine pollution.

The biodegradable resin composition according to the present invention can be suitably used in a wide range of applications, including packaging materials for packaging various foods, medicines, and miscellaneous goods liquids, powders, solids, and the like, agricultural materials, and construction materials, and the like, and can contribute to a wide range of industrial fields.

## Claims

**1.** A biodegradable resin composition comprising:

a polyester resin; and
one or more compounds selected from nitrogen compounds represented by the general formula (I) and salts thereof (excluding (RS)-1-methyl-2-nitro-3-[(3-tetrahydrofuryl)methyl]guanidine, compounds represented by the general formula $NH_2$-CHR-COOH (in the formula, R represents hydrogen or a monovalent aliphatic hydrocarbon group), and phenylalanine),
wherein the polyester resin is a resin having dicarboxylic acid unit and a diol unit,
wherein the content of the compound is 0.1% by weight or more and 70 % by weight or less,
wherein the concentration of nitrogen atom in the compound is 6 % by weight or more, and
wherein the molecular weight of the compound is less than 10000,

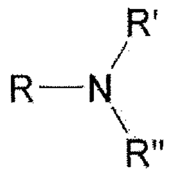

(I)

(in the formula, R, R', and R" each independently represent a hydrogen atom or a monovalent organic group which may have a substituent group which does not form a ring structure with each other).

**2.** A biodegradable resin composition comprising:

a polyester resin; and
one or more compounds selected from nitrogen compounds represented by the general formula (II) and salts thereof (excluding (RS)-1-methyl-2-nitro-3-[(3-tetrahydrofuryl)methyl]guanidine),
wherein the polyester resin is a resin having a dicarboxylic acid unit and a diol unit,
wherein the content of the compound is 0.1 % by weight or more and 70 % by weight or less,
wherein the concentration of nitrogen atom in the compound is 6 wt% or more, and
wherein the molecular weight of the compound is 90 or more and less than 10000,

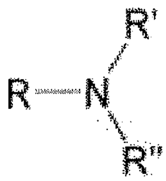

(II)

(in the formula, R, R', and R" each independently represent a hydrogen atom or a monovalent aliphatic organic group, and the aliphatic organic group have a substituent group which does not form a ring structure each other.)

**3.** The biodegradable resin composition according to claim 1 or 2,
wherein the concentration of nitrogen atoms derived from the compound contained in the resin composition is 50 ppm by weight or more.

**4.** The biodegradable resin composition according to claim 1 or 3,

wherein the monovalent organic group which may have a substituent group is a monovalent chain aliphatic organic group which may have a substituent group having 1 to 20 carbon atoms,
wherein the main chain of the organic group may contain elements of Groups 15 to 17, and
wherein the organic group may contain one or more of elements of a nitrogen atom, a sulfur atom, and a phosphorus atom.

**5.** The biodegradable resin composition according to claim 2 or 3,

wherein the monovalent aliphatic organic group which may have a substituent group is a monovalent chain aliphatic organic group which may have a substituent group having 1 to 20 carbon atoms,
wherein the main chain of the aliphatic organic group may contain elements of Groups 15 to 17, and
wherein the aliphatic organic group may contain one or more of elements of a nitrogen atom, a sulfur atom, and a phosphorus atom.

**6.** The biodegradable resin composition according to any one of claims 1 to 5,
wherein the nitrogen compound is at least one selected from the group consisting of an aliphatic monoamine, an aliphatic diamine, and an amino acid.

**7.** The biodegradable resin composition according to any one of claims 1 to 6,
wherein the compound is one or more selected from the group consisting of spermine, tetramethylenediamine, arginine, asparagine, serine, and their hydrochlorides.

**8.** The biodegradable resin composition according to any one of claims 1 to 7, wherein an acid value of the polyester resin is 19 eq/t or more and 250 eq/t or less.

**9.** The biodegradable resin composition according to any one of claims 1 to 8, wherein the polyester resin has three or more types of structural units.

**10.** The biodegradable resin composition according to any one of claims 1 to 9, wherein the polyester resin is an aliphatic polyester resin or aliphatic-aromatic polyester resin.

**11.** The biodegradable resin composition according to any one of claims 1 to 10, wherein the polyester resin has one or more types selected from the group consisting of 1,4-butanediol, 1,3-propanediol, and ethylene glycol, as diol units.

**12.** The biodegradable resin composition according to any one of claims 1 to 11, wherein the polyester resin has 2 to 24 carbon dicarboxylic acids as dicarboxylic acid units.

**13.** The biodegradable resin composition according to any one of claims 1 to 12, wherein the polyester resin has at least either of a succinic acid unit and a sebacic acid unit.

**14.** The biodegradable resin composition according to any one of claims 1 to 13, wherein the polyester resin is at least one selected from the group consisting of polybutylene succinate adipate (PBSA), polybutylene succinate sebacate (PBSSe), polybutylene succinate (PBS) and polybutylene sebacate terephthalate (PBSeT).

**15.** A molded article comprising the biodegradable resin composition according to any one of claims 1 to 14.

**16.** A biodegradation method of polyester resin which is a method of biodegrading polyester resin,

wherein a glass transition temperature of the polyester resin is 40°C or lower, and
wherein the polyester resin is biodegraded in seawater in the presence of one or more compounds selected from nitrogen compounds represented by the following general formula (I) and salts thereof having a molecular weight of less than 10000,

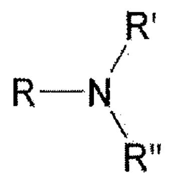

(I)

(in the formula, R, R', and R" each independently represent a hydrogen atom or a monovalent organic group which may have a substituent group which does not form a ring structure with each other).

**INTERNATIONAL SEARCH REPORT**

International application No.
**PCT/JP2022/037405**

**A. CLASSIFICATION OF SUBJECT MATTER**

***C08L 67/02***(2006.01)i; ***C08G 63/16***(2006.01)i; ***C08K 5/17***(2006.01)i; ***C08L 101/16***(2006.01)i
FI: C08L67/02 ZBP; C08K5/17; C08G63/16; C08L101/16

According to International Patent Classification (IPC) or to both national classification and IPC

**B. FIELDS SEARCHED**

Minimum documentation searched (classification system followed by classification symbols)

C08L1/00-101/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2003-003049 A (TOYOBO CO., LTD.) 08 January 2003 (2003-01-08)<br>claims, paragraphs [0015], [0035]-[0042], [0096]-[0111] | 1-15<br>16 |
| X | KR 10-2006-0047113 A (BIO REPLA CORP.) 18 May 2006 (2006-05-18)<br>claims, page 3, lines 5-10, page 3, line 4 from the bottom to page 8, line 5 from the bottom | 1-16 |
| X<br>A | JP 2004-093788 A (FUJIKURA LTD.) 25 March 2004 (2004-03-25)<br>claims, paragraph [0010], examples | 16<br>1-15 |
| A | 淵田茂司, 海底熱水中に溶存するアミノ酸の起源とその特徴, 地球化学, 2015, 49, pages 247-259, DOI:10.14934/chikyukagaku.49.247, (FUCHIDA, Shigeshi. Origins and characteristics of dissolved amino acids in seafloor hydrothermal vent fluids. Chikyukagaku (Geochemistry).)<br>particularly, page 247 | 1-16 |
| L | JP 7173259 B1 (MITSUBISHI CHEMICAL CORP.) 16 November 2022 (2022-11-16)<br>entire text | 1-16 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 November 2022** | **13 December 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/037405**

| Patent document cited in search report | Publication date (day/month/year) | Patent family member(s) | Publication date (day/month/year) |
| --- | --- | --- | --- |
| JP 2003-003049 A | 08 January 2003 | (Family: none) | |
| KR 10-2006-0047113 A | 18 May 2006 | (Family: none) | |
| JP 2004-093788 A | 25 March 2004 | (Family: none) | |
| JP 7173259 B1 | 16 November 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009113288 A


### Non-patent literature cited in the description


- *Polymer Degradation and Stability,* 2013, vol. 98, 1089-1096
- *Molecular Cloning,* vol. 3
- **KYTE ; DOOLITTLE.** *J. Mol. Biol.,* 1982, vol. 157, 105-132